# EUROPEAN PATENT SPECIFICATION

(11) **EP 1 500 963 B1**
(45) Date of publication and mention of the grant of the patent: **21.05.2008**
(21) Application number: 03756685.8
(22) Date of filing: 17.10.2003
(51) Int. Cl.: G02B 21/34, G02B 21/36

(54) **SLIDE GLASS, COVER GLASS, AND PATHOLOGIC DIAGNOSIS SYSTEM**
SCHIEBEGLAS, ABDECKGLAS UND PATHOLOGISCHES DIAGNOSESYSTEM
PREPARATION MICROSCOPIQUE, LAMELLE COUVRE-OBJET ET SYSTEME DE DIAGNOSTIC PATHOLOGIQUE

(30) Priority: 18.10.2002 JP 2002304742
(43) Date of publication of application: 26.01.2005
(73) Proprietor: HAMAMATSU PHOTONICS K. K., Hamamatsu-shi, Shizuoka 435-8558 (JP)
(72) Inventor: MATSUMOTO, Kazuji, c/o Hamamatsu Photonics K.K., Hamamatsu-shi, Shizuoka 435-8558 (JP); HARA, Masahiro, c/o Hamamatsu Photonics K.K., Hamamatsu-shi, Shizuoka 435-8558 (JP); OSHIRO, Masafumi, c/o Hamamatsu Photonics K.K., Hamamatsu-shi, Shizuoka 435-8558 (JP)
(74) Representative: Frost, Alex John
(86) International application number: PCT/JP2003/013325
(87) International publication number: WO 2004/044639

(56) References cited:
- JP-A- 9 043 515
- JP-A- 9 203 865
- JP-A- 10 123 429
- JP-A- 11 088 661
- JP-A- 2000 155 268
- JP-A- 2002 135 605
- JP-U- 59 054 805

## Description

### Technical Field

The present invention relates to a slide glass and others used in a microscope in an image taking system which has at least a microscope for observation of a measured sample, and an imaging device for taking an image of the measured sample acquired from the microscope.

### Background Art

In recent years, network operations are getting common, such as an operation of sending an image of a measured sample taken with use of a microscope, for example, to a location different from an image-taking place and using the image there. These network operations include such operations as telepathology; e.g., a pathologist at a remote location observes the image of the measured sample taken with the microscope and makes a diagnosis. With increasing frequency of microscopic diagnosis in the future, it will become more important to allow different observers to share the same image information permitting objective evaluation under a light source of standard tone even if the different observers observe the same measured sample with different microscopes and under different observation conditions and produce output images by means of different image output media.

A slide glass used in the conventional microscopic observation is, for example, the one described in Japanese Patent Application Laid-Open No. 9-218932. This slide glass has a portion on which a specimen (measured sample) to be observed with a microscope is mounted, a portion in which a microscopic image obtained by imaging the specimen observed with the microscope, and instrument information indicating states of various controlled portions of the microscope upon the imaging are recorded as optically readable dot code patterns, and a portion in which a reduced image of the microscopic image is recorded as an index image. This slide glass is designed to enable collective management of the specimen and information about the specimen.
WO01/04828 discloses a color standard calibration with calibration slides used for color balance calibration. The calibration slide consists of a 'clear area' and a color filter called a 'dark' area. WO01/04828 discloses also a microscope system for image analysis of stained tissue samples using these calibration slides, wherein color information is provided by the image of the calibration slide. An image converter adjusts the image displayed on a monitor for providing correct color balance based on the information of the calibration slide.
WO01/06238 discloses glass microscope slides on which a micro array of spots is created for fluorescence DNA analyses. At least two spots are made of a single pure dye and used as comparative references for evaluating the emission spectra of the dyes and their overlap.

### Disclosure of the Invention

The Inventors investigated the aforementioned conventional technology and found the following problems. Namely, in the case of the microscopic observation using the conventional slide glass, there was no measured sample presenting reference colors or known spectra under the microscope and it was thus infeasible to determinately and objectively perform color evaluation of the image of the measured sample taken with the microscope. Therefore, the images of the measured sample taken with the microscope have been evaluated heretofore based on sensuous and empirical colors only.

The color evaluation of a normal measured sample in the fields other than the observation of the measured sample with the microscope can be implemented by photographing a commercially available reference color chart (e.g., such color charts as the Munsell color charts available from Munsell Co., the DIC color sample book, and the Machbeth color-checkers) in a system of photographing and evaluating a measured sample, e.g., in a system including a color digital camera and peripheral devices such as a display, a printer, and so on.

Since the aforementioned color charts are industry standards, use of the color charts as a common reference permits us to objectively evaluate colors of images of the measured sample taken, not only between devices in a specific maker (e.g., hardware such as color cameras, displays, printers, etc.), but also between devices manufactured by any manufacturers. However, there was little study heretofore about colors of the image under the microscope and about the color evaluation in the imaging system including the microscope.

As has often been the case in the past, observation with arbitrary change of colors according to observer's own color sensation (sensitivity), e.g., change of light-source colors, is also significant as an observation technique. In that case, even if the photography (diagnosis) leaves some sensuous discretionary zone as described, it is necessary to determine conditions for expression of accurate colors on a hardware basis, and it is also necessary to record a history (information) about under what conditions the measured sample was subjected to the image taking and observation, as is the case in the image taking of a reference measured sample itself (known colors plus known spectral characteristics). It was, however, infeasible to implement such recording in the microscopic observation using the conventional slide glass.

Furthermore, it is also necessary to match colors of a finally obtained image (colors of an output image on a display or colors of an output image on a recording medium such as paper by a printer) with colors under the microscope. However, it was also infeasible to implement such matching in the microscopic observation using the conventional slide glass.

More specifically, where the conventional slide glass was applied to a microscope and an image taking system for taking an image of a measured sample obtained from the microscope, the color image (in the visible region) obtained by photography of the measured sample had the following problems: (a) the imaging characteristics of the color camera used in taking of the image of the measured sample with the microscope were uncertain; (b) how the reference colors as color evaluation references for the color image were measured was indefinite (a problem in use of the slide glass).

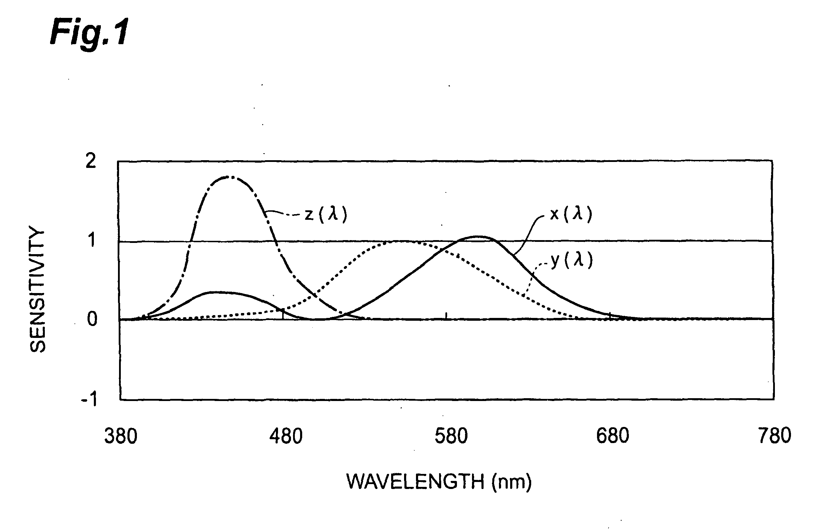

First, the problem of the above item (a) results from the difference in spectral sensitivity characteristics between used color cameras. This problem becomes more prominent between cameras of different manufacturers. Normally, the ideal spectral sensitivity characteristics of the camera are determined based on a color development system on the display. For example, taking the sRGB chromatic coordinate system recently becoming a standard for an example, the ideal sensitivity characteristics are derived from the chromaticity coordinates of respective RGB developed colors of the sRGB color coordinate system, and the color-matching functions (x(λ), y(λ), z(λ)) of the XYZ color system shown in Fig. 1.

The ideal spectral sensitivity characteristics of the color system usually have minus sensitivity characteristics (e.g., cf. Fig. 2). All the other coordinate systems (e.g., PAL, NTSC (1953), CIE RGB, and the RGB coordinate system of trinitron by Sony Corporation) also have minus sensitivity characteristics. Each manufacturer performs a matrix operation, for example, based on the sensitivity characteristics (raw data) of the camera shown in Fig. 3, so as to match the aforementioned characteristics, and thereby creates, for example, the sensitivity characteristics (corrected data) of the camera as shown in Fig. 4.

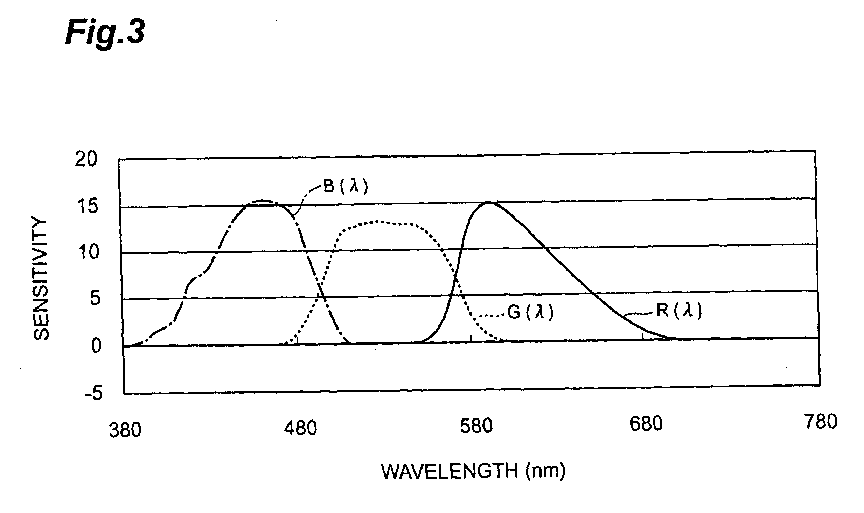

The color-matching functions of the XYZ color system shown in Fig. 1 are ideal spectral characteristics of all positive values without minus sensitivity. From these, arbitrary ideal imaging characteristics can be gained by one-to-one transformation. It is, however, difficult to create the ideal imaging characteristics, for example, by a prism of a 3-chip camera, and, as an optically easy creating method, it is common practice to create them from trisected characteristic values on a spectral wavelength basis or from the sensitivity characteristics (raw data) of the camera shown in Fig. 3.

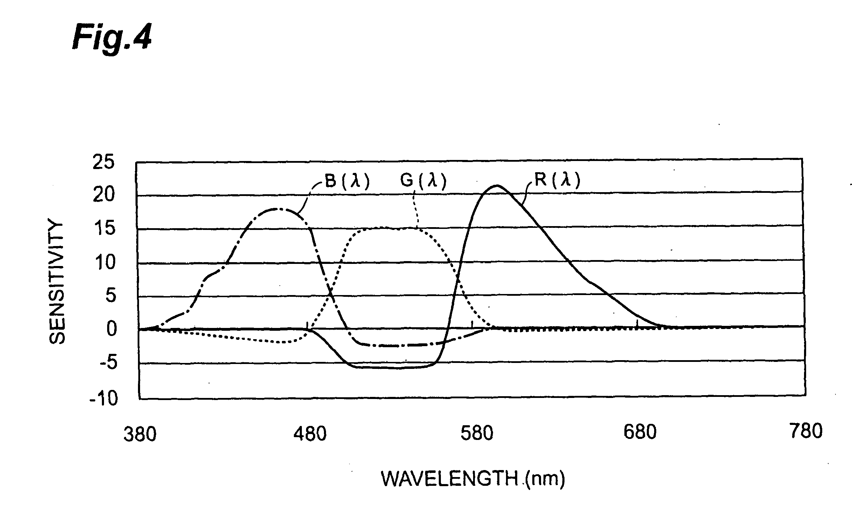

For example, the fundamental spectral portions being the sensitivity characteristics (raw data) of the camera shown in Fig. 3, and the final spectral characteristics, for example, the sensitivity characteristics (corrected data) of the camera shown in Fig. 4, which were obtained by the matrix calculation for correction for the raw data (which was handled by an analog circuit before), are portions featuring each manufacturer; for example, chroma is enhanced or redness is enhanced. For this reason, the color cameras have different spectral sensitivity characteristics, depending upon manufacturers, and the final spectral sensitivity characteristics are not revealed.

As described above, where the cameras as imaging devices are those from different manufacturers, the problem of color difference among images was inherent even among images of the measured sample taken under the same conditions except for the cameras. Since the final spectral sensitivity characteristics of cameras are not revealed, the user side had no choice but to perform measurements using a color camera with unknown spectral sensitivity characteristics.

Therefore, in the case of photography of the measured sample with use of the conventional slide glass, it was infeasible to ensure consistency between images as to colors of images obtained with different cameras.

On the other hand, the problem of the aforementioned item (b) is as follows. Namely, where photography of the measured sample is carried out through the microscope, in order to emphasize a characteristic difference of the measured sample, the color temperature (tone) of the light source is properly adjusted and the color balance is also adjusted according to need, whereby an image is taken at the best view of an observer. For this reason, data values about initial colors of the image of the measured sample are often ignored, so as to lose values like absolute values.

Furthermore, with additional factors such as enrichment of software permitting easy color transformation, there is another problem that the user easily changes color values. For this reason, the original measured values are ignored and changed as a result. With change -of the measured values about colors in the original image, there remains no course of change (information of change conditions), which posed a problem that what were the original measured values became unknown.

The present invention has been accomplished in order to solve the problems as described above, and an object of the invention is to provide a slide glass and a cover glass capable of supplying color information as comparative references that can be used in color evaluation and color correction of an image of a measured sample taken with a microscope, and a pathological diagnosis system using either of these glasses.

A slide glass according to the present invention comprises a glass plate, and one or more micro color filter groups provided on one surface of the glass plate and, more specifically, is used in a microscope in an image taking system having at least a microscope for observing a measured sample, and an imaging device for taking an image of the measured sample obtained from the microscope. Particularly, each of the one or more micro color filter groups comprises two or more color-reference micro color filters each of which is used for taking a color as a comparative reference used in color evaluation and color correction of the image. Two or more color-reference micro color filters belonging to an identical group out of the one or more micro color filter groups are placed so as not to overlap with each other on the surface of the glass plate, the filters have their respective reference colors different from each other, and a size of each filter is adjusted in a range where the color-reference micro color filter can be captured within a field of view acquired in use of at least one of objective lenses provided in the microscope. The color-reference micro color filters encompass a color-reference micro gray filter having an achromatic color plotted on the neutral axis.

In the present specification, the "imaging device" embraces a camera and, a component for photographing a sample, such as a digital slide (virtual slide), a scanner, an image pickup part in Virtual Microscope, or the like. The "color" in the "color evaluation and color correction of the image" and the "color" in the "color as a comparative reference" are those created from a spectral distribution of the measured sample and, simply stated, they are values obtained by multiplying spectral reflection and spectral transmission by a light-source spectral distribution used for irradiation of the measured sample or by multiplying radiant spectroscopy itself by spectral characteristics (or arbitrary R, G, and B spectral characteristics) such as the color-matching functions (x(λ), y(λ), z(λ)), or modified values thereof (L*a*b*), or the like. They also refer to typical names meant by those values, e.g., red, yellow, blue, etc. or special technical names (e.g., 1.6YR6.3/3.9 and others on the Munsell color chart values). This accords with human visual sensation.

However, even if two colors of the image of the measured sample with the microscope are those recognized as the same color by human eyes, they can be different from each other as a result of measurement of spectral characteristics. In the present specification, therefore, the "color information" as a comparative reference that can be used in color evaluation and color correction of the image indicates information about a color taking the information of the aforementioned spectral characteristics into consideration.

The aforementioned "spectral distribution of the measured sample" represents a spectral distribution that the measured sample itself has. For example, it can be spectral reflectance, spectral transmittance, spectral emissivity, or the like obtained by ordinary spectrophotometry.

The slide glass according to the present invention (which will be referred to hereinafter as a "slide glass with color-reference microfilters" as occasion may demand) permits us to objectively evaluate the color characteristics of the image of the measured sample taken with the microscope, using the color characteristics (spectral characteristics) of the aforementioned color-reference micro color filters as a comparative reference.

Even if the same measured sample is photographed with different imaging devices (e.g., cameras with different spectral sensitivities), where the color characteristics of the color-reference micro color filters are measured, the difference in the color characteristics between images taken by the different imaging devices can be quantitatively gained using the color characteristics as a comparative reference. Particularly, it is feasible to ensure consistency of color characteristics of taken images between imaging devices of different manufacturers. For this reason, for example, it is also possible to correct the color characteristics of one of the images taken by two different imaging devices so as to match the color characteristics of the other image.

Examples of possible correction for the color characteristics of the image include a color correction to effect such color matching that a final image outputted by image outputting means becomes close to a visually observed image in microscopic observation, an adjustment toward a color desired by the user, a correction of effecting an adjustment toward a color desired by the user and thereafter returning the color characteristics to initial characteristics of the original image, and so on. Furthermore, it also becomes feasible to ensure evaluation and calibration of images outputted from different image outputting means on the basis of images taken by different imaging devices (output images on display monitors, or output images on recording media such as paper by use of printers).

In the case of the slide glass with color-reference microfilters according to the present invention, even if the original image of the measured sample is subjected to various processings to obtain the final image outputted from the image outputting means, it is feasible to readily know how the color characteristics (spectral characteristics) of the color-reference micro color filters have been changed on a processing-by-processing basis, by recording measurement conditions (e.g., characteristics such as the color temperature of the light source upon photography, lens-system characteristics, sensitivity characteristics, degree of change of color values by internal software, etc.) for the color characteristics (spectral characteristics) of the color-reference micro color filters in each of the processing steps carried out.

The use of the slide glass with color-reference microfilters according to the present invention enables us to accomplish quantitation under the microscope (e.g., quantitation of a specific substance included in the measured sample, or the like), particularly, quantitation using absorption information.

Furthermore, the foregoing quantitation may be carried out using a spectral imaging sensor (e.g., the spectral imaging sensor described in Japanese Patent No. 2713838), instead of an RGB color camera, as a light receiving sensor. This also makes it feasible, for example, to measure a concentration of a measured sample stained. In such cases, for example, filters containing a reference color material in reference concentrations may be prepared as the color-reference micro color filters. Using these as a reference, it is feasible to determine an unknown concentration of a specific substance in the measured sample under the microscope.

With the slide glass (slide glass with color-reference microfilters) according to the present invention, information about invisible color in the image of the measured sample may also be acquired in the same manner as in the case where the information of colors in the visible region described above is handled.

Since an image of invisible color of the measured sample contains extremely useful information about physical states or chemical states of a subject that cannot be recognized by human eyes, the acquired image information may contain the information of the invisible color image in the case where the measured sample is photographed with the microscope, using the slide glass.

First, the "invisible color" herein indicates color based on invisible light (e.g., ultraviolet light in the wavelength range of 200 to 380 nm or near-infrared light in the wavelength range of 780 nm to 20 µm) except for the visible light (light in the wavelength range of 380 to 780 nm) included in radiant light radiated from the image of the measured sample.

Using the spectral distribution of the invisible light obtained from the image of the measured sample, it is possible to acquire color values (invisible) by a technique similar to that in the case of handling the spectral distribution of visible light. It is also possible to acquire other color values by multiplying the said color values by an appropriate integral function. Furthermore, typical names meant by the color values obtained in this manner are defined as color names. In the present specification, these color names determined based on the invisible light will be generally called "invisible color."

A "reference color" is ideally a so-called unique color, which is normally said to be a color without color mixture among such hues as red, green, yellow, and blue, and hues of reference colors can be those separated with an equal spacing between colors. However, it is not necessary to define their hue values in a strict sense.

For example, according to color reference setting methods of (1) and (2) described later, it is effective to use two or more reference colors, preferably three or more colors, and no problem will arise in use of any hues as references as long as colors are set so as to equalize hue intervals as much as possible; for example, in the case of three colors, hue angles between reference colors are about 120°; in the case of four colors, the hue angles are about 90°; in the case of six colors, the hue angles are about 60°; and in the case of twelve colors, the hue angles are about 30°. However, the necessary minimum condition is that the reference colors should be colors that can be displayed in the image taking system using the slide glass with color-reference microfilters.

In the case of (3) reference colors for staining described later, the reference colors are selected from colors developed by a dye. In this case, at least two colors can be used as reference colors, and color value confirmation and color adjustment are carried out within the range of colors that can be made between the at least two colors. In a precise sense, a color on the neutral axis is also normally matched (i.e., a color in a state without any sample is matched with white (gray)), and thus three colors including it are used.

Furthermore, (5) references of invisible color described later are also basically based on the same idea as in the visible region. Namely, in the same manner as in the case of the references of (1) and (2), such a sample is selected as to equally space hues of invisible color values obtained by multiplying spectral values of respective parts measured, by a sensitivity function of the imaging device such as a camera, and colors set by measuring the sample are used as references; or, in the same manner as in the case of the references of (3), invisible color values themselves obtained by multiplying spectral values of respective parts in a sample stained with a reference dye, by a sensitivity function of the imaging device may be used as reference values.

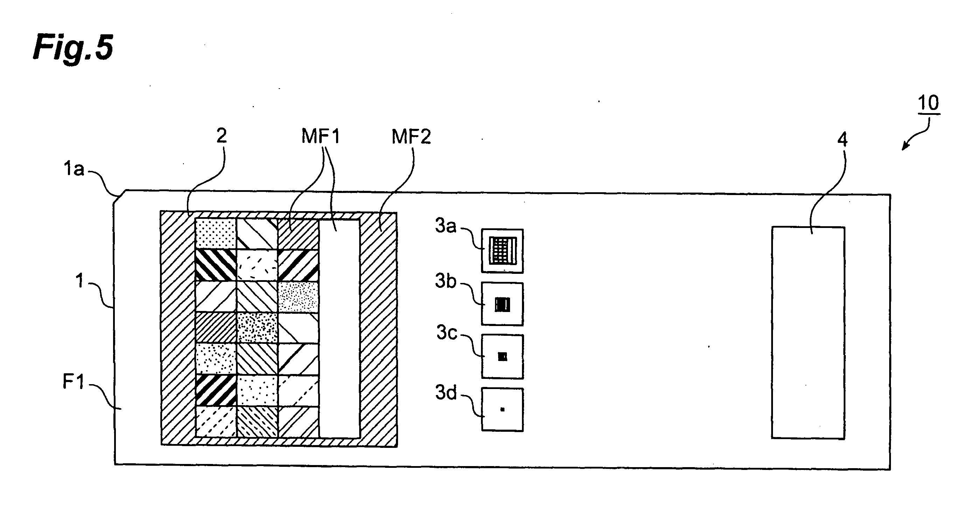

In the slide glass with color-reference microfilters according to the present invention, one micro color filter group (e.g., reference is made to color palette portions 3a, 3b, 3c, and 3d for microscopic observation in Fig. 5 described later) includes two or more color-reference micro color filters, and the two or more color-reference micro color filters belonging to an identical micro color filter group have their respective reference colors different from each other. Namely, in the slide glass with color-reference microfilters according to the present invention, one micro color filter group contains information of at least two or more reference colors out of all the hues.

In the slide glass with color-reference microfilters according to the present invention, the micro color filter groups (e.g., reference is made to the color palette portions 3a, 3b, 3c, and 3d for microscopic observation in Fig. 5 described later) are provided corresponding to respective objective lenses in the microscope. The two or more color-reference micro color filters belonging to the same group out of the one or more micro color filter groups are preferably those each having a size adjusted in a range where the filter can be captured within the field of view acquired in use of a corresponding objective lens.

This permits the user to capture a micro color filter group of a size matching a magnification of an objective lens within the field of view even in use of any objective lens mounted on the microscope, and it is thus feasible to accurately and readily gain colors as comparative references used in the color evaluation and color correction of the image of the measured sample.

Furthermore, in the slide glass with color-reference microfilters according to the present invention, each of two or more color-reference micro color filters belonging to one of the one or more micro color filter groups preferably has a visible size (cf. a large-area color palette portion 2 in Fig. 5 described later).

This permits the user to readily comprehend which micro color filter group with color-reference microfilters of which colors is in use, even without using the microscope. The user can also measure the spectral characteristics of the color-reference microfilters, without using the microscope.

In the slide glass with color-reference microfilters according to the present invention, two or more color-reference micro color filters belonging to the same group out of the one or more micro color filter groups preferably have the same size. This allows the color-reference micro color filters to be readily juxtaposed in a compactly dense state on the surface of the glass plate, whereby one micro color filter group can be readily constructed in a compact size.

In the slide glass with color-reference microfilters according to the present invention, the one or more micro color filter groups may further comprise one or more color-reference micro color filters each having an intermediate chroma color with a chroma difference of an equal spacing relative to the reference colors. This makes it feasible to more accurately perform the color evaluation and color correction of the image.

In the slide glass with color-reference microfilters according to the present invention, the one or more micro color filter groups may further comprise one or more color-reference micro color filters each having an achromatic color plotted on the neutral axis. This makes it feasible to more accurately perform the evaluation and correction of colors of the image (particularly, colors on the neutral axis).

Furthermore, in the slide glass with color-reference microfilters according to the present invention, each reference color is preferably red, green, blue, cyan, magenta, or yellow. This makes it feasible to more accurately and more readily perform the color evaluation and color correction of the image.

In the slide glass with color-reference microfilters according to the present invention, each of two or more color-reference micro color filters belonging to the same group out of the one or more micro color filter groups has a rectangular shape and they are arranged with a predetermined interval enough to avoid contact with each other. In this case, the slide glass with color-reference microfilters preferably further comprises a black microfilter of a ring shape arranged to surround the entire peripheral part of each color-reference micro color filter without clearance. This can adequately reduce entrance of rounding light (e.g., background light to the slide glass during observation or the like) from the region other than the observed part into the microscope.

In the slide glass with color-reference microfilters according to the present invention, each of two or more color-reference micro color filters belonging to the same group out of the one or more micro color filter groups may have a rectangular shape and they may be juxtaposed in a dense state without clearance. This permits the color-reference micro color filters to be more securely and more readily juxtaposed in a compactly dense state on the surface of the glass plate, whereby one micro color filter group can be more securely and more readily constructed in a compact size. In this case, the slide glass with color-reference microfilters may further comprise a black microfilter of a ring shape arranged to surround the entire peripheral part of each micro color filter group without clearance. This can adequately reduce entrance of rounding light (e.g., background light to the slide glass during observation or the like) from the region other than the observed part into the microscope.

In the slide glass with color-reference microfilters according to the present invention, a measured sample mounting portion on which the measured sample is to be mounted is further provided on the surface of the glass plate. This permits the user to simultaneously perform the acquisition of the image and the color evaluation and color correction of the image. In this case, preferably, at least one of the micro color filter groups is provided in a region of the measured sample mounting portion. This permits the user to more readily simultaneously perform the acquisition of the image and the color evaluation and color correction of the image.

Next, the slide glass with color-reference microfilters according to the present invention has a structure in which two or more color-reference micro color filters are printed on a glass plate, and these color-reference micro color filters may be printed on a cover glass to be brought into contact with the measured sample mounting portion on the glass plate. Namely, one or more color-reference micro color filters for acquisition of colors as comparative references to be used in the color evaluation and color correction of the image are placed on one surface of the cover glass (cover glass according to the present invention). In this case, each of the color-reference micro color filters has a size adjusted in a range where the micro color filter can be captured within a field of view acquired in use of at least one of objective lenses provided in the microscope.

In the cover glass according to the present invention, the color-reference micro color filters are preferably arranged in asymmetric arrangement relative to a center of gravity of the cover glass. This asymmetric arrangement of the color-reference micro color filters can make a definite distinction between a top surface and a back surface of the cover glass. However, the cover glass may also be provided with an identification mark for distinguishing the top surface from the back surface.

Furthermore, the slide glass (slide glass according to the present invention) and the cover glass (cover glass according to the present invention) having the structure as described above can be applied to a pathological diagnosis system. For example, where the slide glass with color-reference microfilters is applied, the pathological diagnosis system performs a pathological diagnosis by making use of an image of a measured sample mounted on the slide glass. When the cover glass having the color-reference micro color filters is applied, the pathological diagnosis system performs a pathological diagnosis by making use of an image taken through the cover glass, of a measured sample mounted on the slide glass.

Specifically, a pathological diagnosis system according to the present invention comprises at least an image taking system, an image converter, and a monitor, and can also perform a remote pathological diagnosis to transfer image data of a measured sample taken by the image taking system, through a communication line (an electronic communication line such as LAN or Internet, a satellite circuit, a telephone line, or the like), regardless of whether wired or wireless.

The image taking system comprises at least a microscope for observing a measured sample, and an imaging device for taking an image of the measured sample obtained from the microscope, the imaging device comprising a component for photographing a sample, e.g., a camera or, a digital slide (virtual slide), a scanner, an image pickup part in Virtual Microscope, or the like. The image converter takes in color information of color-reference micro color filters photographed in the image taking system, directly or through a communication line or the like and adjusts colors of an image to be displayed, based on these color-reference micro color filters. The monitor displays the image of colors adjusted by the image converter.

Each of embodiments according to the present invention can be more fully understood with reference to the detailed description and accompanying drawings which will follow. It is noted that these embodiments are presented merely for illustrative purposes only but are not to be considered as restrictive to the present invention.

The scope of further application of the present invention will become apparent from the following detailed description. However, the detailed description and specific examples show preferred embodiments of the present invention but are presented for illustrative purposes only, and it is clear that various modifications and improvements within the scope of the present invention are obvious to those skilled in the art from the detailed description.

### Brief Description of the Drawings

Fig. 1 is a graph showing color-matching functions (x(λ), y(λ), z(λ)) of the XYZ color system. functions (x(λ), y(λ), z(λ)) of the XYZ color system.

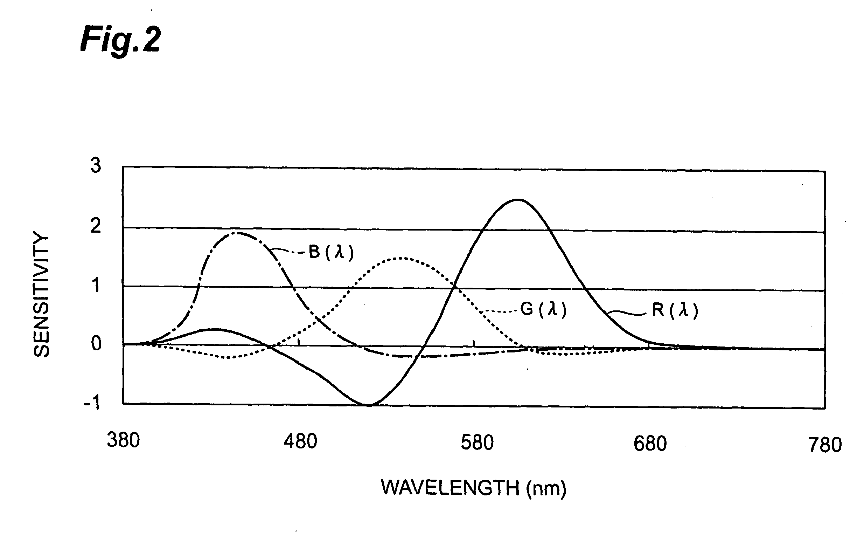

Fig. 2 is a graph showing an example of ideal sensitivity characteristics of the sRGB color coordinate system.

Fig. 3 is a graph showing an example of sensitivity characteristics (raw data) of a camera used in photomicrography.

Fig. 4 is a graph showing an example of sensitivity characteristics (corrected data) of a camera used in photomicrography.

Fig. 5 is a front view schematically showing a fundamental configuration in a first embodiment of the slide glass (slide glass with color-reference microfilters) according to the present invention.

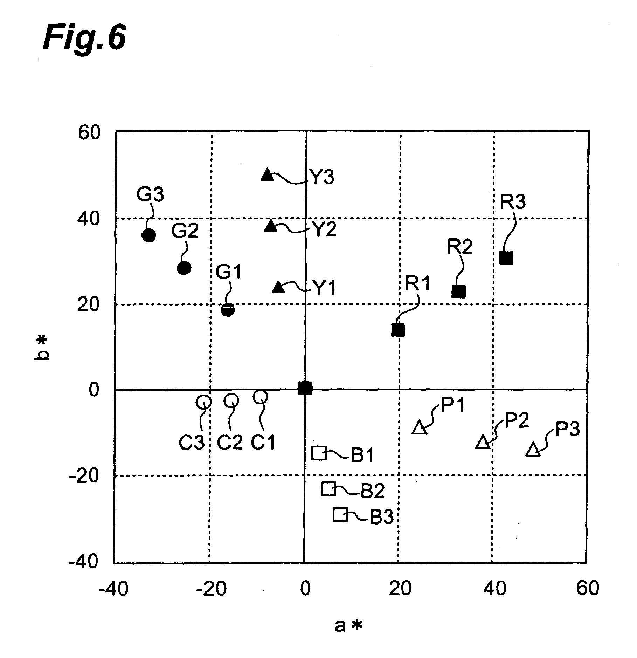

Fig. 6 is a graph showing an example of values on chromaticity coordinates (a*b* space) of principal reference colors assigned to each of microfilters MF1 provided on the slide glass (slide glass with color-reference microfilters) shown in Fig. 5.

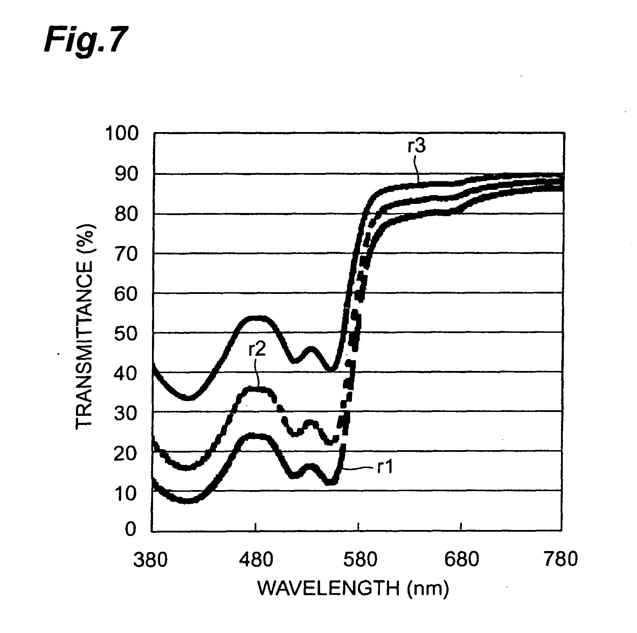

Fig. 7 shows red (reference color) filter characteristics, in which r1 represents red (high chroma color), r2 red (intermediate chroma color), and r3 red (low chroma color).

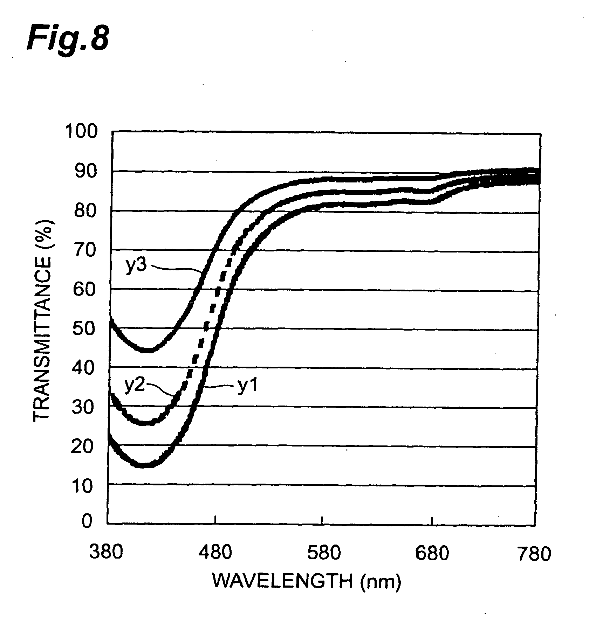

Fig. 8 shows yellow (reference color) filter characteristics, in which y1 represents yellow (high chroma color), y2 yellow (intermediate chroma color), and y3 yellow (low chroma color).

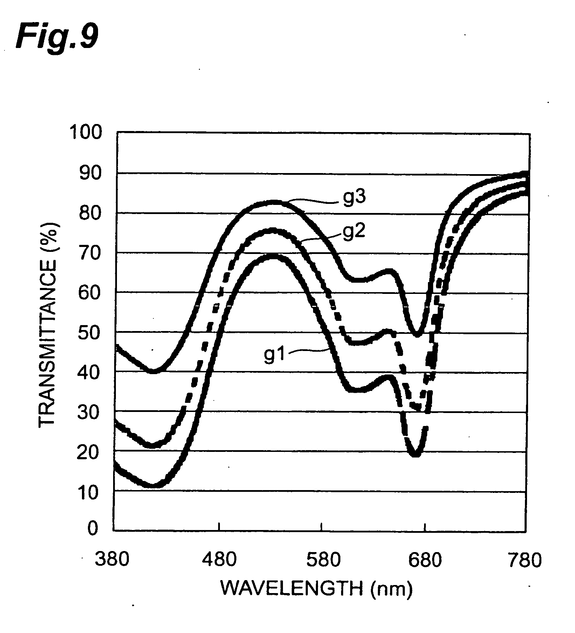

Fig. 9 shows green (reference color) filter characteristics, in which g1 represents green (high chroma color), g2 green (intermediate chroma color), and g3 green (low chroma color).

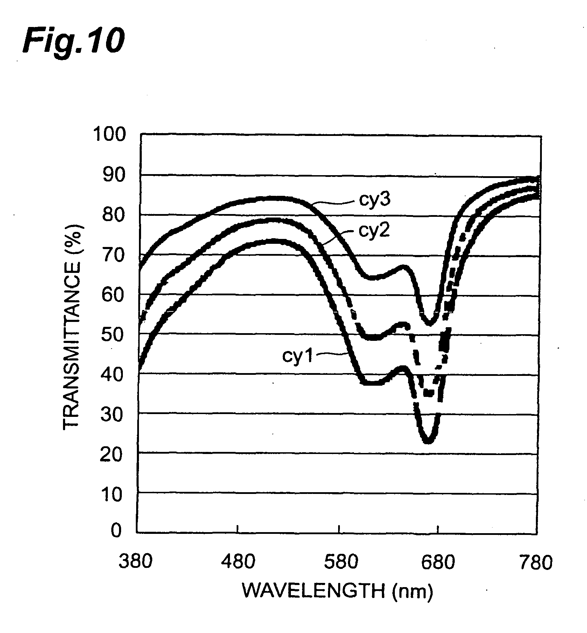

Fig. 10 shows cyan (reference color) filter characteristics, in which cy1 represents cyan (high chroma color), cy2 cyan (intermediate chroma color), and cy3 cyan (low chroma color).

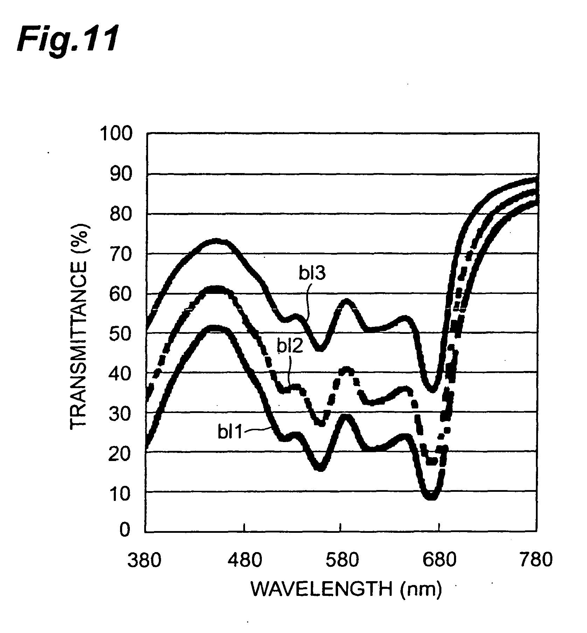

Fig. 11 shows blue (reference color) filter characteristics, in which bl1 represents blue (high chroma color), bl2 blue (intermediate chroma color), and bl3 blue (low chroma color).

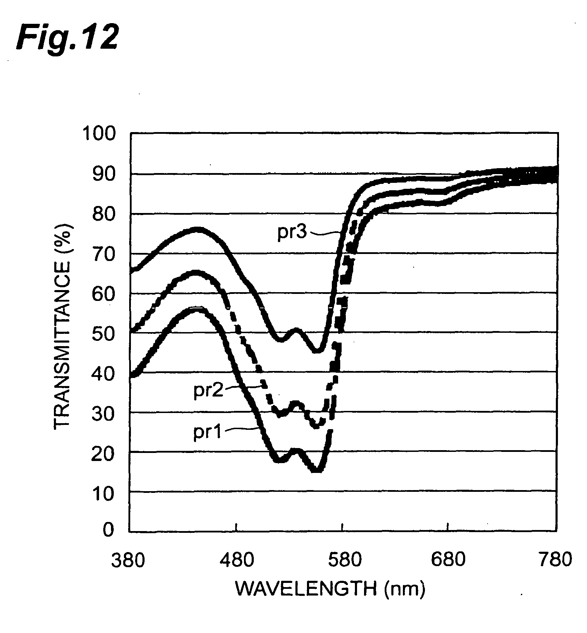

Fig. 12 shows purple (reference color) filter characteristics, in which pr1 represents purple (high chroma color), pr2 purple (intermediate chroma color), and pr3 purple (low chroma color).

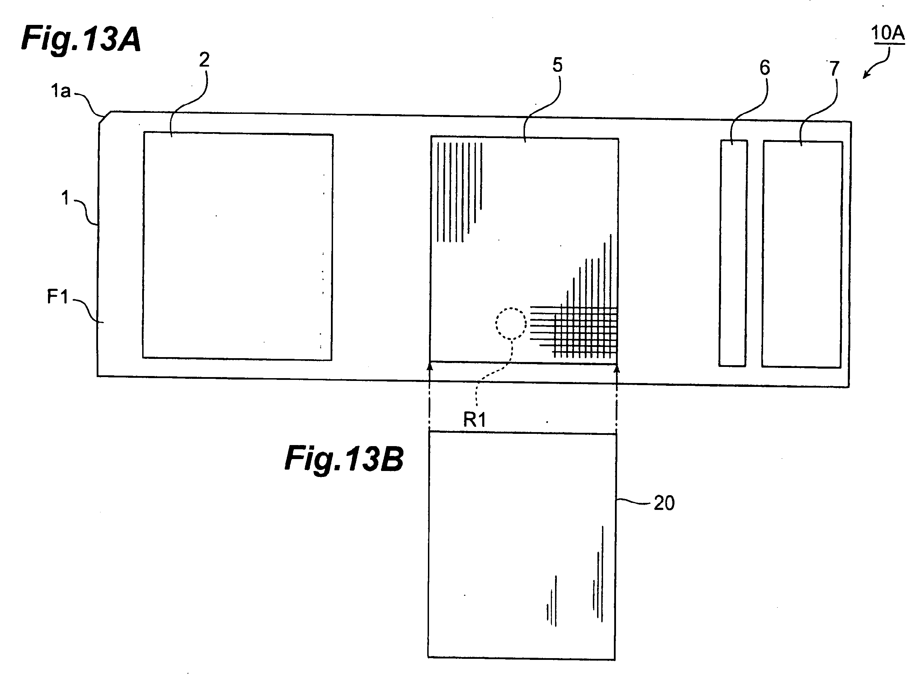

Fig. 13A is a front view schematically showing a fundamental configuration in a second embodiment of the slide glass (slide glass with color-reference microfilters) according to the present invention, and Fig. 13B a front view showing a cover glass.

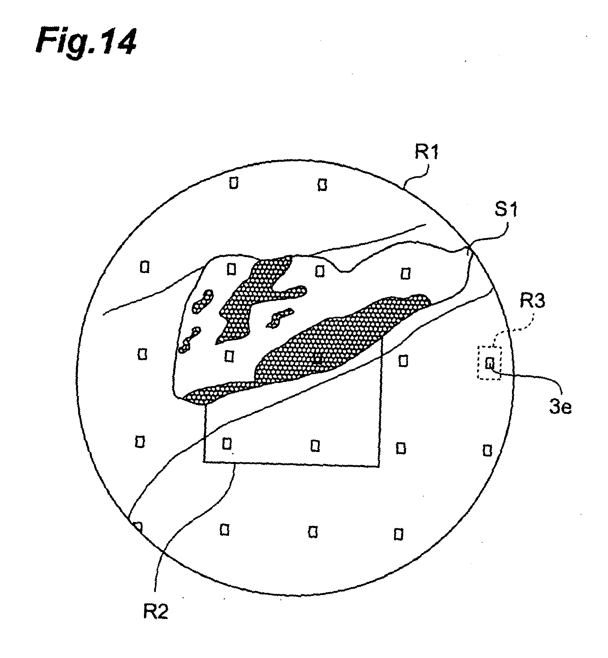

Fig. 14 is an enlarged view of a region R1 in a measured sample mounting portion shown in Fig. 13A.

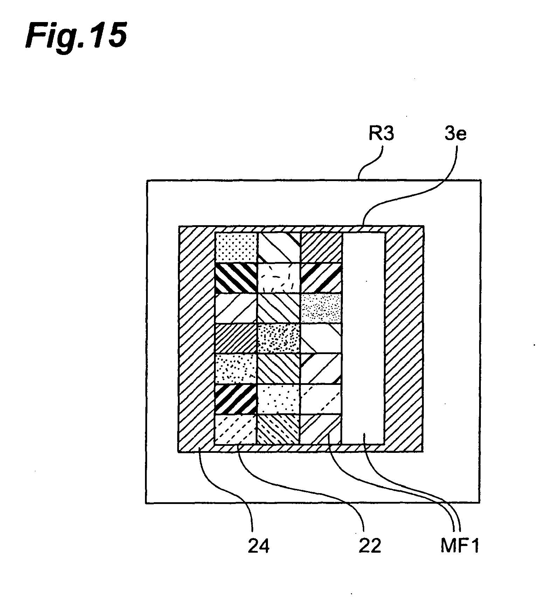

Fig. 15 is an enlarged view of a region R3 in the region R1 shown in Fig. 14.

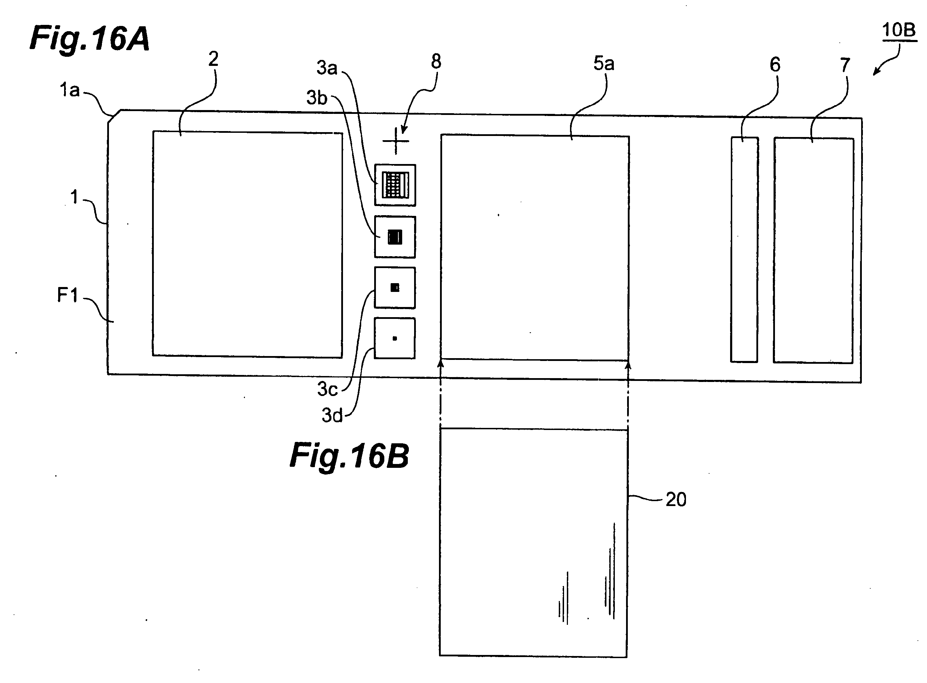

Fig. 16A is a front view schematically showing a fundamental configuration in a third embodiment of the slide glass (slide glass with color-reference microfilters) according to the present invention, and Fig. 16B a front view showing a cover glass.

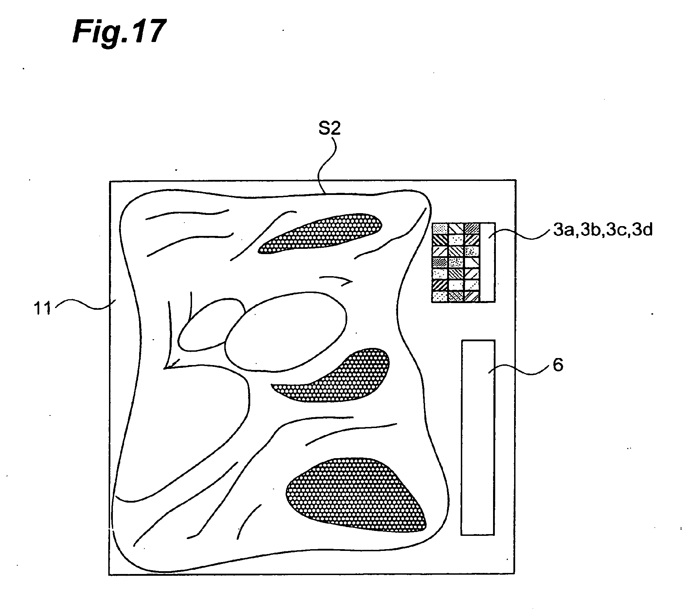

Fig. 17 is an illustration for explaining a display example in a case where an image of a measured sample taken with use of the slide glass (slide glass with color-reference microfilters) shown in Fig. 16A is outputted.

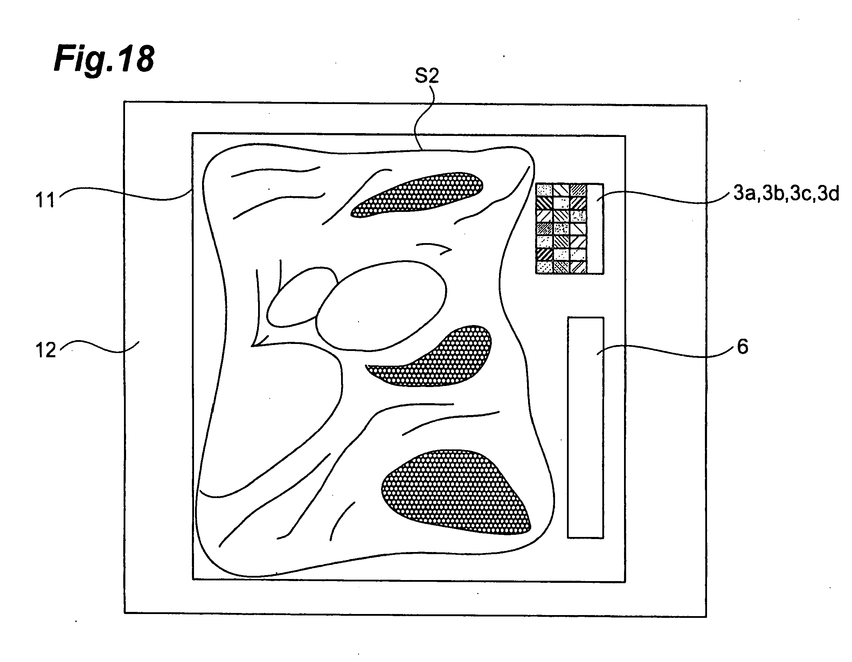

Fig. 18 is an illustration for explaining another display example in a case where an image of a measured sample taken with use of the slide glass (slide glass with color-reference microfilters) shown in Fig. 16A is outputted.

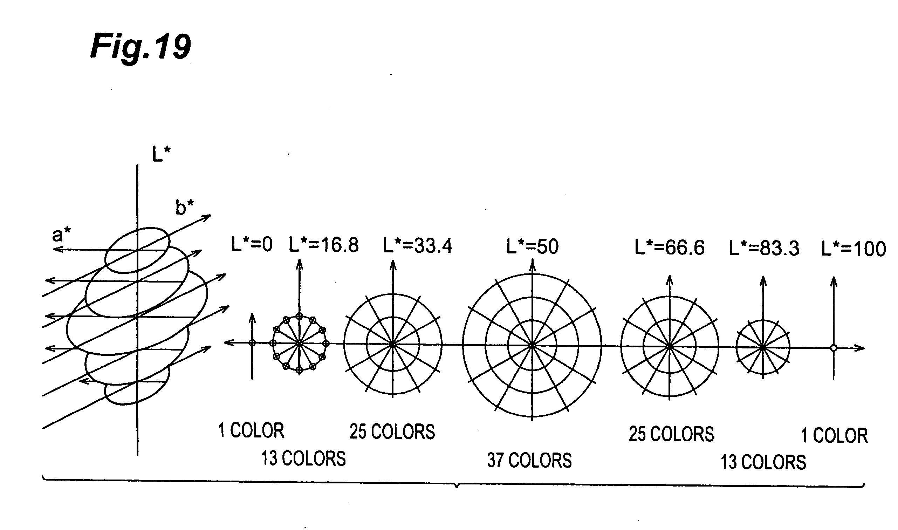

Fig. 19 is an illustration for explaining an example of the L*a*b* color system used in setting of color characteristic values (spectral characteristic values) of each micro color filter MF1.

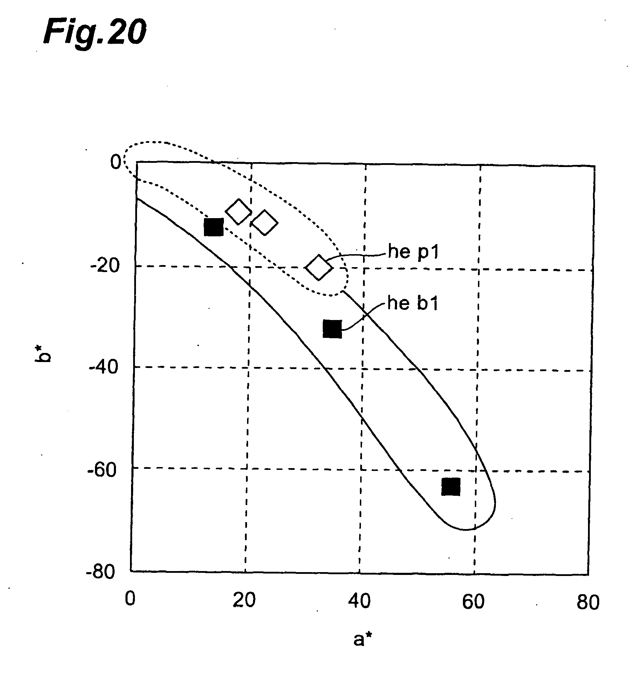

Fig. 20 is a graph acquired when color values obtained in an example where a measured sample is stained by hematoxylin-eosin (HE) stain are expressed as a* values and b* values in the L*a*b* color system.

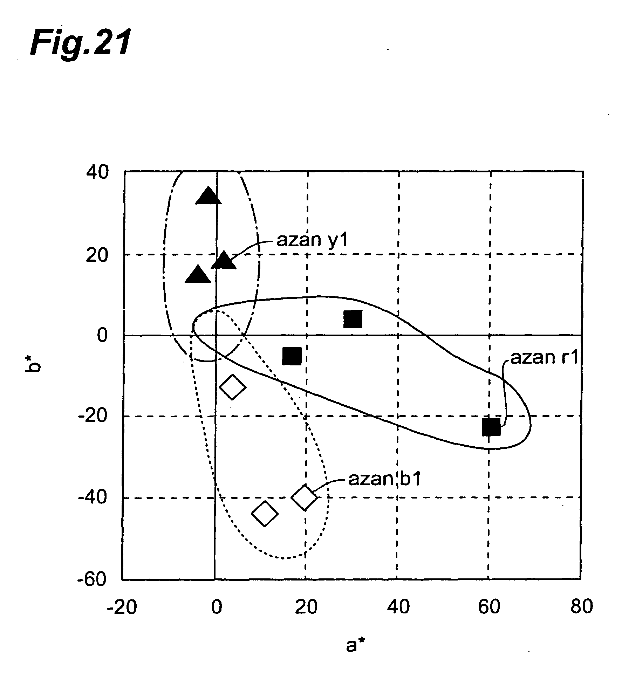

Fig. 21 is a graph acquired when color values obtained in an example where a measured sample is stained by azan stain are expressed as a* values and b* values in the L*a*b* color system.

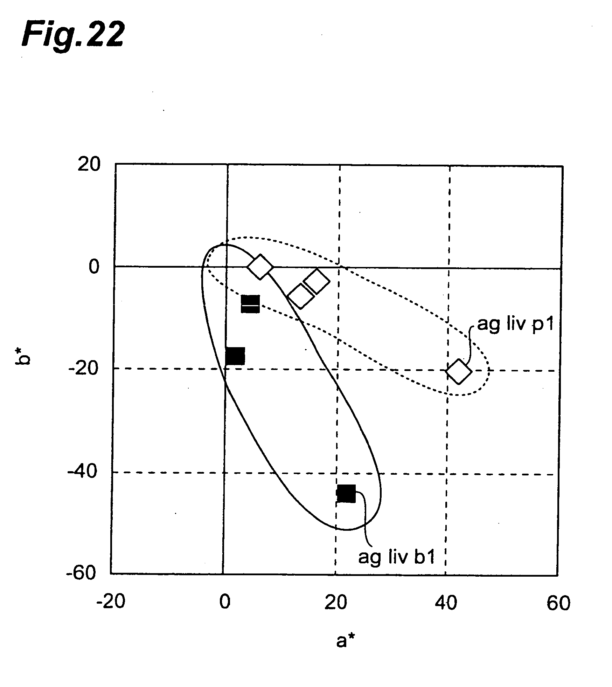

Fig. 22 is a graph acquired when color values obtained in an example where a measured sample is stained by Reticulin silver impregnation are expressed as a* values and b* values in the L*a*b* color system.

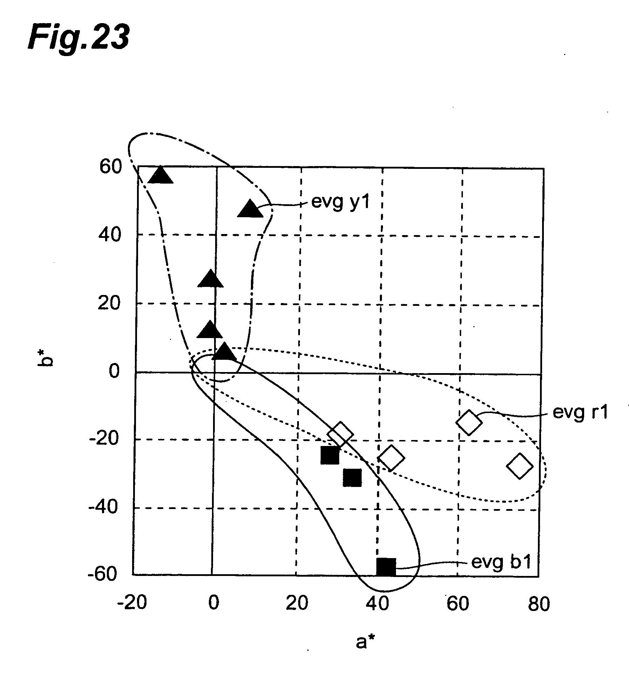

Fig. 23 is a graph acquired when color values obtained in as example where a measured sample is stained by Elastica van Gieson stain are expressed as a* values and b* values in the L*a*b* color system.

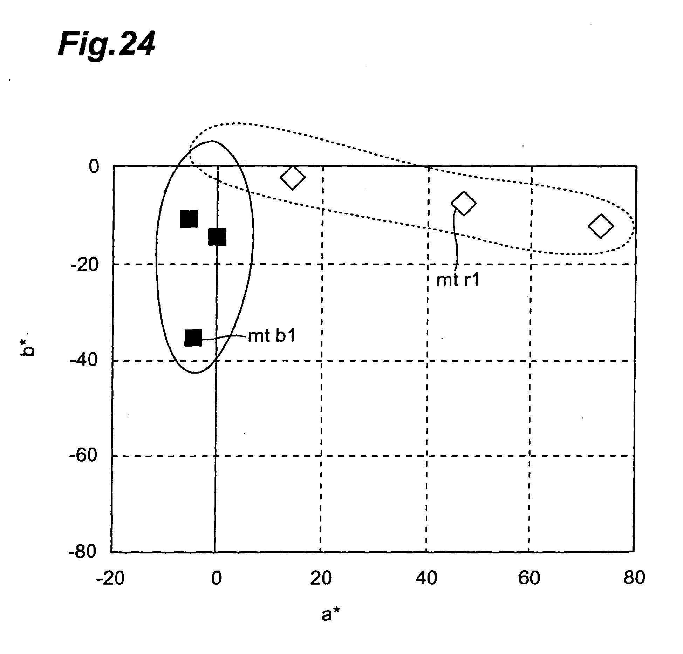

Fig. 24 is a graph acquired when color values obtained in an example where a measured sample is stained by Masson trichrome stain (MT) are expressed as a* values and b* values in the L*a*b* color system.

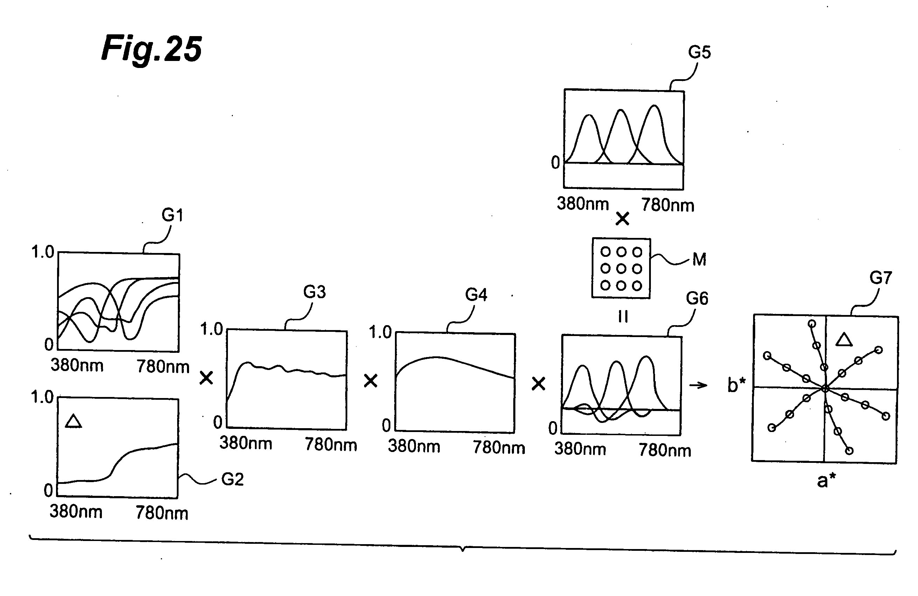

Fig. 25 is an illustration for explaining an example of image processing using the slide glass (slide glass with color-reference microfilters) according to the present invention.

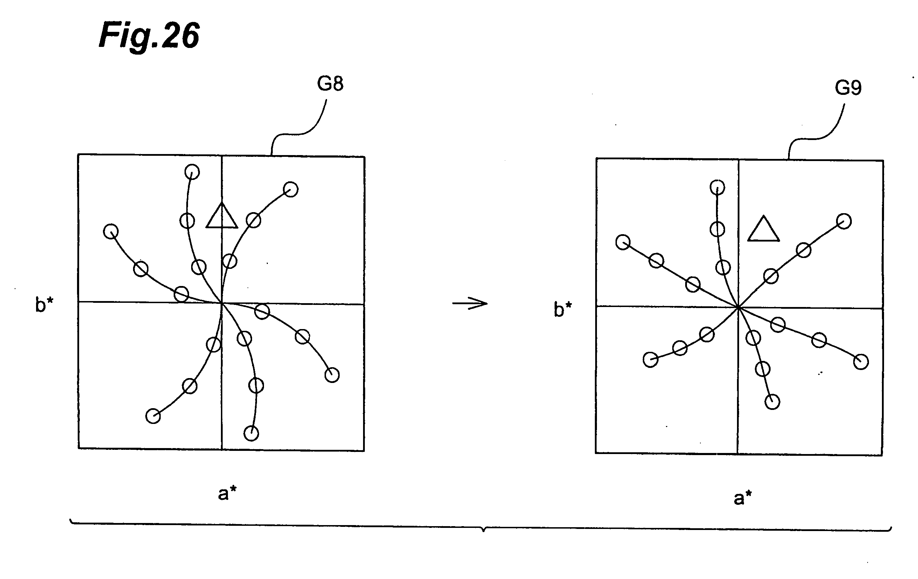

Fig. 26 is an illustration for explaining an example of image processing using the slide glass (slide glass with color-reference microfilters) according to the present invention.

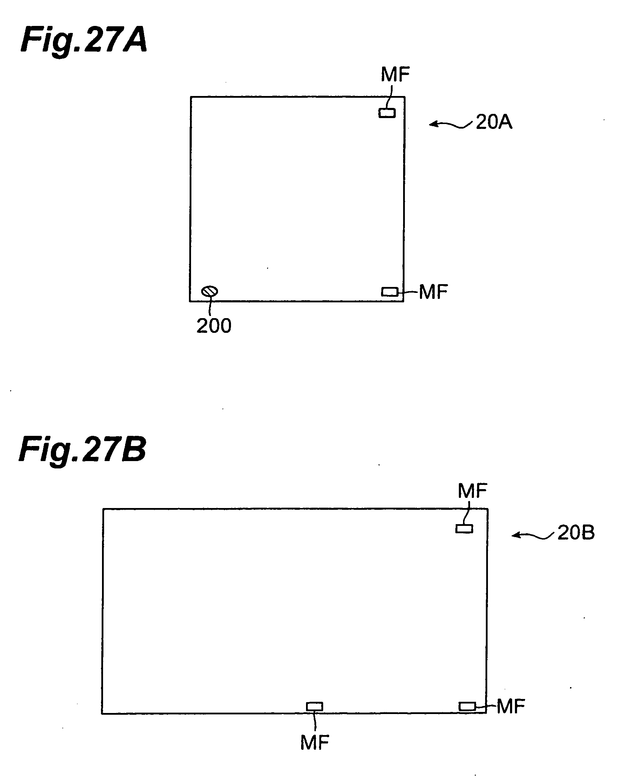

Figs. 27A and 27B are front views schematically showing fundamental configurations in first and second embodiments of the cover glass according to the present invention.

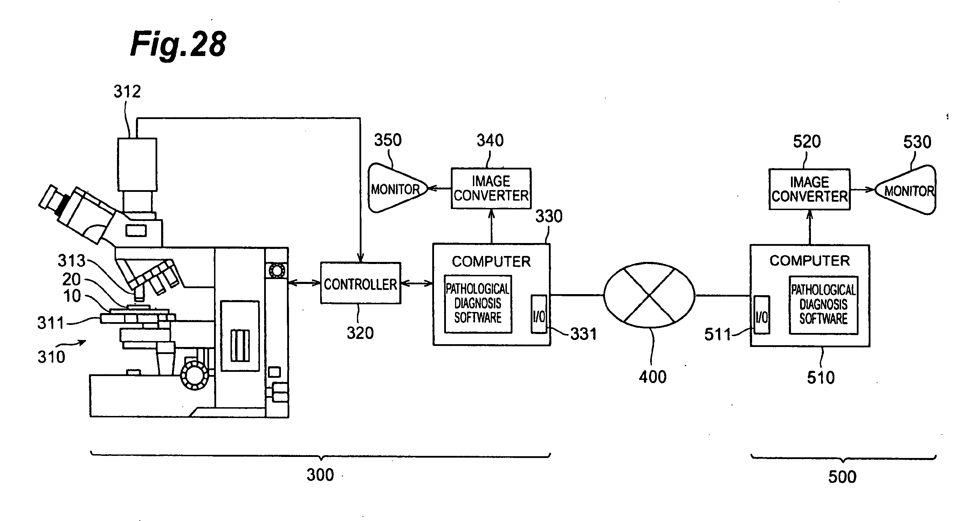

Fig. 28 is an illustration showing a schematic system configuration, particularly, in a case of a remote pathological diagnosis, as a pathological diagnosis system according to the present invention.

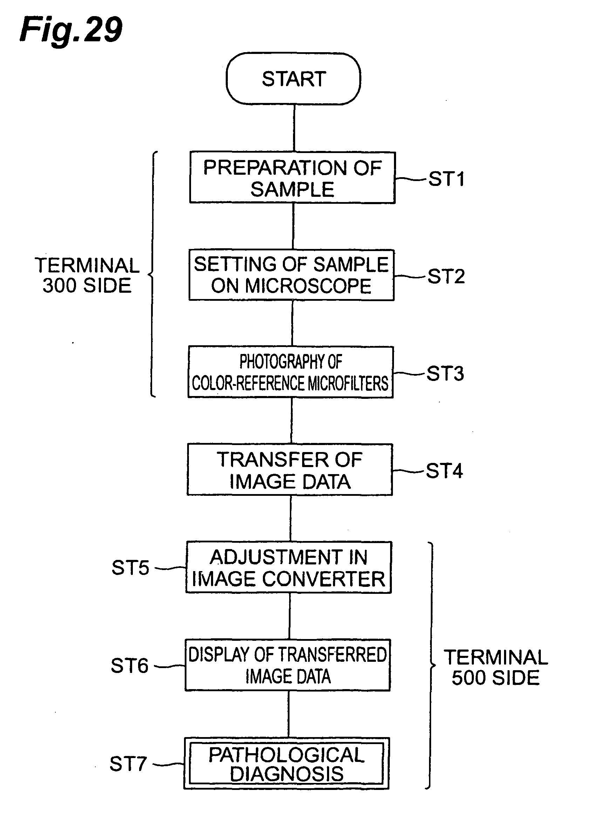

Fig. 29 is a flowchart for explaining preprocessing before a start of a remote pathological diagnosis in the pathological diagnosis system shown in Fig. 28.

### Best Mode for Carrying out the Invention

Each of embodiments of the slide glass (slide glass with color-reference microfilters), cover glass, and pathological diagnosis system according to the present invention will be described below in detail with reference to Figs. 5-12, 13A, 13B, 14-15, 16A, 16B, 17-26, 27A, 27B, 28, and 29. In the description of drawings the same or equivalent portions will be denoted by the same reference symbols, without redundant description.

### (First Embodiment of Slide Glass)

Fig. 5 is a front view schematically showing a fundamental configuration in the first embodiment of the slide glass (which will be referred to hereinafter as a "slide glass with color-reference microfilters") according to the present invention.

As shown in Fig. 5, a slide glass 10 with color-reference microfilters according to the first embodiment is comprised of a glass plate 1 (e.g., in the size of 26 mm x 76 mm), a large-area color palette portion 2 formed on an upper surface F1 of the glass plate 1, four color palette portions 3a, 3b, 3c, and 3d for microscopic observation, and a name label 4.

As shown in Figs. 5 and 15, the large-area color palette portion 2 is comprised of a micro color filter group placement area 22 in which at least two (twenty two in Fig. 5) micro color filters (transparent bodies) MF1 having their respective tones different from each other are juxtaposed in a fit, attached, or printed state, and a black microfilter placement area 24 in which a black microfilter MF2 surrounding the outer periphery of the micro color filter group placement area 22 is placed.

Each micro color filter MF1 in the micro color filter group placement area 22 has a substantially rectangular shape and its size is, for example, approximately 4 mm x 3 mm. The large-area color palette portion 2 is provided for measuring the spectral characteristics of each micro color filter MF1, without using the microscope.

The black microfilter MF2 in the black microfilter placement area 24 is provided for adequately reducing entrance of rounding light (e.g., background light to the slide glass during observation or the like) from the region other than the observed part, into the interior of the microscope. This black microfilter placement area 24 can be formed on the upper surface F1 of the glass plate 1, for example, by a well-known technique such as a black resist. In cases where measurement is carried out also including the rounding light from the outside, the slide glass may be constructed in a configuration without the black microfilter placement area 24.

The microscopic-observation color palette portions 3a, 3b, 3c, and 3d (micro color filter groups) have much the same configuration as the large-area color palette portion 2 except that their sizes are reduced in certain similitude ratios relative to the large-area color palette portion 2. The size of each microscopic-observation color palette portion 3a, 3b, 3c, or 3d is one that accords with one of objective lenses having different magnifications (e.g., objective lenses having different magnifications such as 10×, 20×, 40×, 100×, and so on) provided in the microscope in use. For this reason, even if an objective lens of the microscope is replaced with another having a different magnification to change the area of the field of view for simultaneous taking, an observer can capture one of the microscopic-observation color palette portions 3a, 3b, 3c, and 3d within the field of view without fail.

A cut portion 1a is provided in a peripheral portion of the glass plate 1 (in Fig. 5, at one of the four corners of the rectangular upper surface F1). This permits the user to readily discriminate the upper surface F1 from the back surface of the glass plate 1. The name label 4 is prepared for allowing the user to write a name of a measured sample, a memorandum such as observation conditions of the measured sample, or the like.

The micro color filters MF1 and black microfilter MF2 in each of these large-area color palette portion 2 and microscopic-observation color palette portions 3a, 3b, 3c, and 3d are printed under the same conditions (same process and same time). For this reason, the printed portions are uniform in various characteristics and thus have equivalent spectral characteristics.

Next, the micro color filters MF1 provided in each of the large-area color palette portion 2 and the microscopic-observation color palette portions 3a, 3b, 3c, and 3d will be described. Each micro color filter MF1 is made of a transparent substance (color material) comprised of colors selected so as to be hues spaced with an equal spacing, e.g., six colors out of the principal reference colors of red, green, blue, cyan, magenta, and yellow.

The reference colors may be a little more finely defined, e.g., eight or more colors, ten or more colors, or twelve or more colors. Filters of tones of several levels resulting from lightening of these reference colors (colors with chromaticity characteristics obtained by stepwise lightening chroma from the principal reference colors) may be further placed. Furthermore, filters of achromatic colors (transparent, gray, and black) may also be placed in addition to the above filters of the tones. In a simple configuration the large-area color palette portion 2 and the microscopic-observation color palette portions 3a, 3b, 3c, and 3d may be comprised of three micro color filters MF1 of the principal three primary colors (red, green, and blue) only.

In this manner, the minimum color references can be achieved in the configuration without the filters of tones of several levels resulting from lightening of the reference colors and without the filters of achromatic colors (from transparent to black). Concerning the configuration with the achromatic color filters, for example, where it is necessary to perform observation of a measured sample of a scattering medium, the filters can be an array of filters of different scattering media. This permits the user to use them as scattering medium references for microscope.

Here the "principal reference colors" are colors within chromaticity coordinates that can be expressed by ordinary display systems, for example, colors with spectral transmittance characteristics designed so as to match the chromaticity coordinates shown in Fig. 6 (a*b*space). Typical examples of the "spectral transmittance characteristics" are, for example, the transmittance characteristics of filters as shown in Figs. 7 to 12.

Fig. 7 shows filter characteristics of red (reference color), in which r1 represents red (high chroma color), r2 red (intermediate chroma color), and r3 red (low chroma color). Fig. 8 shows filter characteristics of yellow (reference color), in which y1 represents yellow (high chroma color), y2 yellow (intermediate chroma color), and y3 yellow (low chroma color). Furthermore, Fig. 9 shows filter characteristics of green (reference color), in which g1 represents green (high chroma color), g2 green (intermediate chroma color), and g3 green (low chroma color).

Fig. 10 shows filter characteristics of cyan (reference color), in which cy1 represents cyan (high chroma color), cy2 cyan (intermediate chroma color), and cy3 cyan (low chroma color). Fig. 11 shows filter characteristics of blue (reference color), in which bl1 represents blue (high chroma color), bl2 blue (intermediate chroma color), and bl3 blue (low chroma color). Furthermore, Fig. 12 shows filter characteristics of purple (reference color), in which pr1 represents purple (high chroma color), pr2 purple (intermediate chroma color), and pr3 purple (low chroma color).

The microfilters of the principal reference colors and the microfilters of the colors with chromaticity characteristics stepwise lightened in chroma from the principal reference colors can be formed, for example, by a technology of adjusting the thickness of the microfilters or reducing concentrations of raw materials of colors (respective color materials).

In the case of photomicrography, as an objective lens is replaced with another to increase the magnification to a higher magnification, the field becomes darker with increase in the number of lenses and in the thickness thereof, and normally often becomes more yellowish for the reason of decrease of transmittance on the short wavelength side. Namely, even in observation of the same sample, a change of measurement parameters such as the lens replacement will result in making a difference in tone. For detecting the small color difference, the same measured sample is measured after the lens replacement. On that occasion, it is convenient to maintain the overall arrangement and the size of the measured sample upon the replacement of the objective lens.

For this reason, the slide glass 10 with color-reference microfilters is configured so that the measured sample in the field of view is displayed in the same shape and size in line with the replacement of the objective lens. Specifically, where the scope of replacement of objective lenses is, for example, 20×, 40x, and 100×, in conjunction therewith the microscopic-observation color palette portions 3b, 3c, and 3d are arranged to be selected so as to be 1/2, 1/4, and 1/10, respectively, of the palette 3a of the minimum magnification, e.g., 10x.

In the first embodiment the slide glass 10 with color-reference microfilters is used as follows. Namely, the slide glass 10 with color-reference microfilters is prepared and a slide glass for a measured sample to be mounted is also prepared. With switchover between those, the color references and the measured sample are separately photographed.

### (Second Embodiment of Slide Glass)

Fig. 13A is a front view schematically showing a fundamental configuration in the second embodiment of the slide glass (slide glass with color-reference microfilters) according to the present invention, and Fig. 13B a front view showing a cover glass. Fig. 14 is an enlarged view of a region R1 in a measured sample mounting portion 5 shown in Fig. 13A. The region R1 shown in Figs. 13A and 14 indicates, for example, a region in the field of the microscope in use of the objective lens with the tenfold magnification. R2 in Fig. 14 indicates a region of a field of a taken image. Furthermore, Fig. 15 is an enlarged view of a region R3 in the region R1 shown in Fig. 14. The region R3 shown in Figs. 14 and 15 indicates, for example, a region of a microscope field (or a region of a taken image) in use of an objective lens with the hundredfold magnification.

As shown in Fig. 13A, a slide glass 10A with color-reference microfilters according to the second embodiment is comprised of a glass plate 1 (e.g., in the size of 26 mm x 76 mm), a large-area color palette portion 2 formed on an upper surface F1 of the glass plate 1, a measured sample mounting portion 5, a bar code 6, and a memo space 7. The glass plate 1 and the large-area color palette portion 2 are similar to those in the slide glass 10 with color-reference microfilters according to the aforementioned first embodiment.

The measured sample mounting portion 5 is a portion on which a measured sample is to be mounted, and a cover glass 20 of Fig. 13B is brought into contact therewith in a state in which the measured sample is placed in between. In the slide glass 10A with color-reference microfilters, as shown in Figs. 14 and 15, a plurality of microscopic-observation color palette portions 3e are juxtaposed at predetermined intervals so as not to overlap with each other in the measured sample mounting portion 5. Each of these microscopic-observation color palette portions 3e has the same configuration as the large-area color palette portion 2 except that it is reduced in a certain similitude ratio relative to the large-area color palette portion 2. For example, in the slide glass 10A with color-reference microfilters, the size of each microscopic-observation color palette portion 3e is, for example, 50 µm × 40 µm.

The bar code 6 shown in Fig. 13A is prepared for recording color information of the image of the measured sample acquired by photomicrography and/or additional information such as the measurement conditions (e.g., a type of a light source, a spectral sensitivity of a camera, etc.) upon acquisition of the image. This bar code 6 may be formed of a color material of black color or may be formed of a color material of a color other than black. The memo space 7 shown in Fig. 13A is also provided for purposes similar to those of the bar code 6. This memo space 7 may be formed, for example, by coating the surface with a magnetic material.

It is contemplated that demands for digitized recording of microscopic images (and additional information) will increase with development of digitization technology as to a preparation for microscope (slide glass + measured sample), as well as X-ray film for medical use, in the feature. In this case, it is believed that it will also become more important to clearly record a basic history about colors of the image of the measured sample acquired by photomicrography.

In this case, a storage form of the original information (i.e., the preparation itself) as to the colors of the image of the measured sample acquired by photomicrography is also believed to be maintained. On that occasion, the provision of these bar code 6 and memo space 7 permits the additional information to be added to the preparation (slide glass + measured sample) itself. Examples of the additional information include a time and date of measurement, a sample name, photography conditions (a photographic light source, a sample lens, a used camera, etc.), and so on.

The slide glass 10A with color-reference microfilters has a configuration in which the color-reference micro color filters in the size matching the objective lens in use are fit, attached, or printed in the region of the measured sample mounting portion 5 on which the measured sample is mounted. In photography of the region of the measured sample mounting portion 5, the reference micro color filters MF1, together with the measured sample S1, can always be observed in the field of view.

For this reason, during observation of the measured sample with the microscope, there is no need for separately preparing a slide glass for reference colors and a slide glass for a measured sample, and the observer can simultaneously photograph the microscopic-observation color palette portions 3e and the measured sample S1 to implement recording of information of colors obtained from photography of the color-reference micro color filters, and automatic adjustment of colors.

In the second embodiment the color-reference micro color filters are embedded or printed on the upper surface F1 of the glass plate 1, but they may be embedded or printed on the cover glass 20 (the cover glass according to the present invention) to be brought into contact with the measured sample mounting portion 5 of the glass plate 1.

### (Third Embodiment of Slide Glass)

Fig. 16A is a front view schematically showing a fundamental configuration in the third embodiment of the slide glass (slide glass with color-reference microfilters) according to the present invention, and Fig. 16B a front view showing a cover glass.

As shown in Fig. 16A, a slide glass 10B with color-reference microfilters according to the third embodiment is comprised of a glass plate 1 (e.g., in the size of 26 mm x 76 mm), a large-area color palette portion 2 formed on an upper surface F1 of the glass plate 1, color palette portions 3a, 3b, 3c, and 3d for microscopic observation, a measured sample mounting portion 5a, a positioning reference mark 8, a bar code 6, and a memo space 7. The cover glass 20 of Fig. 16B is brought into contact with the glass plate 1 in a state in which the measured sample is placed in between.

The glass plate 1, large-area color palette portion 2, and microscopic-observation color palette portions 3a, 3b, 3c, and 3d are similar to those in the slide glass 10 with color-reference microfilters according to the aforementioned first embodiment. The bar code 6 and memo space 7 are similar to those in the slide glass 10A with color-reference microfilters according to the aforementioned second embodiment.

The measured sample mounting portion 5a shown in Fig. 16A has much the same configuration as the measured sample mounting portion 5 in the slide glass 10A with color-reference microfilters according to the aforementioned second embodiment, except that the measured sample mounting portion 5a is not provided with microscopic-observation color palette portions 3e.

The positioning reference mark 8 is used for positioning of the slide glass 10B with color-reference microfilters on a microscope stage (e.g., equivalent to an X-Y stage 311 in Fig. 28) in photography of the microscopic-observation color palette portions 3a, 3b, 3c, and 3d.

For example, with automation of the pathological diagnosis with the microscope or the like, it is contemplated that the measured sample S1 on the slide glass is automatically measured and inspection and others are also automated. The slide glass 10B with color-reference microfilters shown in Fig. 16A is designed as used in such situations.

The photography of the measured sample using the slide glass 10B with color-reference microfilters can be performed, for example, as follows. Namely, using a mechanism capable of taking slide glasses 10B with color-reference microfilters one by one from a casing storing a plurality of slide glasses 10B with color-reference microfilters and setting each slide glass 10B on the microscope stage, the slide glass 10B is set on the microscope stage. After the slide glass 10B is set, the microscope stage moves so that the positioning reference mark 8 agrees with a coordinate position preliminarily determined in the microscope field.

After the positioning reference mark 8 is aligned with the coordinate position, the microscopic-observation color palette portions 3a, 3b, 3c, and 3d are photographed with use of objective lenses of different magnifications, for example, 10×, 20×, 40×, 100×, etc., to photograph micro color filters MF1 corresponding to the magnifications of the respective different-magnification objective lenses. Thereafter, the microscope stage is again moved and adjusted so that the measured sample mounting portion 5a of the slide glass 10B is set within the microscope field. Through the above operation, the measured sample S1 in the measured sample mounting portion 5a is photographed.

The image of the measured sample acquired from the microscope as described above is taken into an image taking system incorporating a computer and others, and is automatically inspected according to an automatic inspection software application provided therein. The image of the measured sample is combined with an image of one of the microscopic-observation color palette portions 3a, 3b, 3c, and 3d. The synthetic image is outputted from an image output portion such as a monitor or a printer.

The image of the measured sample acquired from the microscope may be transferred through an existing communication line, regardless of whether wired or wireless, such as LAN, Internet, a telephone line, or a satellite circuit to another terminal (a remote pathological diagnosis system). This synthetic image may contain the information described in the bar code 6 and/or the memo space 7. This makes it feasible to preserve the conditions upon photography, or the information acquired from the image obtained by photography (information of an evaluation result of the image such as a diagnosis result) as a more definitive record.

A display example of the synthetic image of this type is, for example, the one as shown in Fig. 17. The synthetic image shown in Fig. 17 is an example of the synthetic image, for example, in a case where the image is outputted to a display of a monitor, which displays a set of the image of the measured sample S2 acquired in use of an objective lens with an optimal magnification, one of the microscopic-observation color palette portions 3a, 3b, 3c, and 3d corresponding to the magnification of the objective lens, and the information described in the bar code 6.

The output image may also be the synthetic image as shown in Fig. 18. The synthetic image shown in this Fig. 18 is an example in a case where the synthetic image shown in Fig. 17 is printed on an information recording medium such as paper by a printer, for example. In the synthetic image shown in Fig. 18, one of the microscopic-observation color palette portions 3a, 3b, 3c, and 3d, and the information described in the bar code 6 may be displayed on a margin 12 of the information recording medium outside a taken image region 11 (in an outer marginal region) in Fig. 17.

Next, a method of setting the color characteristic values (spectral characteristic values) of respective micro color filters MF1 provided in each slide glass with color-reference microfilters according to the above-described first to third embodiments will be described. As this setting method, the setting method (1) below is basically adopted according to the information expected to be acquired from the image of the measured sample, but the setting method may also be selected from setting methods (2) to (5) below.

First, in a case where "colors are determined and an object is one based thereon, particularly, an object irrespective of the difference in spectral characteristic values," (1) as the colors of respective micro color filters MF1, colors of different chromas are set on the basis of standard six colors (colors selected as hues spaced with an equal spacing, e.g., six colors out of the principal reference colors of red, green, blue, cyan, magenta, and yellow) or twelve colors. (2) The colors of respective micro color filters MF1 are comprised of typical colors determined by also setting levels of L* values (brightness) in the L*a*b* color system and encompassing the scope covering the entire color space, as shown in Fig. 19.

In Fig. 19, the brightness axis is divided into seven levels, seven achromatic colors are set at the center, and chromatic colors are composed of one hundred and eight colors. When the color references are set throughout the entire dimensions as described above, a deviation of a sample color can be accurately estimated from deviations of the reference colors, and, by using it, it becomes feasible to achieve adjustment to good color reproduction on a display or good color reproduction on a printer.

Next, in a case where "references of colors only are meaningful and an object is one for which spectra themselves are also considered as references," (3) the colors of respective micro color filters MF1 can be reference colors selected as colors limited to in color gamuts stained by each of staining methods, as shown in Figs. 20 to 24. Namely, the reference colors do not always have to be selected from the range covering the entire color gamut, different from the aforementioned methods (1) and (2), but it is also possible to select reference colors close to colors developed by each stain. Values on L* coordinates are also used in this reference color determining technique (3), but they are not described on the graphs.

For example, Fig. 20 is a graph in a case where a biomedical tissue sample of a measured sample is stained by the hematoxylin-eosin (HE) stain, which is a typical stain method in acquisition of reference colors, and color values for reference colors are expressed as a* values and b* values in the L*a*b* color system. In Fig. 20, he b1 represents a chromaticity point in a bluish violet region of nuclei and others stained by hematoxylin, and he p1 a chromaticity point in a red-range purple region of other cytoplasms and others stained by eosin.

Fig. 21 is a graph in a case where the azan stain method is selected as a stain method for connective tissue, instead of the hematoxylin-eosin (HE) stain of Fig. 20, and a measured sample is stained by the azan stain method, and color values for reference values are expressed as a* values and b* values in the L*a*b* color system. In Fig. 21, azan b1 represents a chromaticity point in a region stained in blue indicating the reticular fiber basal membrane around deep blue of collagen fibers, azan r1 a chromaticity point in a region stained in red around nuclei, and azan y1 a chromaticity point in a region stained in yellow indicating the other part than the foregoing.

Fig. 22 is a graph in a case where a measured sample is stained by so-called Reticulin silver impregnation, and color values for reference colors are expressed as a* values and b* values in the L*a*b* color system. In Fig. 22, ag liv b1 represents a chromaticity point in a region stained in deep low-brightness blue (color fairly close to black) around nuclei and reticular fibers, and ag liv p1 a chromaticity point in a region stained in the purple range indicating the other part.

Fig. 23 is a graph in a case where a measured sample is stained by Elastica van Gieson stain (EVG), and color values for reference colors are expressed as a* values and b* values in the L*a*b* color system. In Fig. 23, evg r1 represents a chromaticity point in a red region around collagen fibers, evg b1 a chromaticity point in a region stained in deep low-brightness blue (a color region fairly close to black) around nuclei and elastic fibers, and evg y1 a chromaticity point in a region stained in yellow around erythrocytes and cells.

Fig. 24 is a graph in a case where a measured sample is stained by the Masson trichrome stain method (MT), and color values for reference colors are expressed as a* values and b* values in the L*a*b* color system. In Fig. 24, mt r1 represents a chromaticity point in a region stained in red indicating cytoplasmic or acidophil cytocrine secretory granules or the like, and mt b1 a chromaticity point in a region stained in blue indicating the other part such as collagen fibers.

Furthermore, it is also possible to select reference colors close to colors developed by each of other stain methods such as polysaccharide stains typified by the periodic acid Schiff (PAS) stain and the Best Karmin stain, stains of pathogenic microorganisms in tissue typified by the Ziehl-Neelsen stain and the Gram stain, stains of blood cells in tissue, stains of kidney, amyloid stains, stains of endocrine granules, stains of pigments in vivo, stains of inorganic substances in tissue, fat stains, stains of central nervous tissue, stains of nucleic acids, and enzyme histochemistry stains, in addition to the stain methods shown in Figs. 20 to 24. It is also possible to select as color references, colors developed by other color materials matched in tone only (colors in metameric match) so as to achieve matching with the colors stained by each of the staining methods.

When this color-reference setting method (3) is selected, the fundamental usage thereof is different from that of the setting methods (1) and (2). In the setting methods of (1) and (2) three or more reference colors are set so as to cover an almost entire color gamut in use, and measured colors are values determined on the assumption that a surface or a solid created with the three or more color values as references forms a reference skeleton and measured values are located (or plotted) in the surface or in the solid, or outside an extrapolated surface or outside an extrapolated solid. Namely, a matter here is where a measured sample is located, on the basis of the lines (skeleton) connecting the reference colors to each other.

The setting method (3) is different from the method wherein the colors for the skeleton are used as references and a measured sample is allowed to be apart therefrom as in the setting method (2), and thus is a method of using stain colors themselves as basic (reference) colors, for checking a relation of actually measured values with the basic colors, or for matching them with the basic colors. For example, using a spider web as a metaphor, the setting methods (1), (2), and (3) all define cross joint portions between spider's web threads as reference colors.

Next, concerning the colors of the sample, the colors of the sample may be located anywhere in the setting methods (1) and (2); they may be on threads or anywhere outside threads, basically without any problem. The sample colors are colors for checking the positional relation except the web or for adjusting it, on the basis of the spider's web. It is, however, better that the sample colors are located in the spider web.

On the other hand, it is better in the setting method (3) that the sample colors are located at cross points between threads and on threads, or at sites near them, and a significant point is how close they are to the spider's web lines. The setting method (3) involves a meaning of setting the reference colors, for the purpose of checking the positional relation of the sample colors or for the purpose of adjusting the locations by use of it.

In a case where an object is "one for which spectra themselves are used as references," (4) the colors of respective micro color filters MF1 are set to colors with spectra matched with spectra of substances in a measured sample. In the above methods (1) to (3) each micro color filter MF1 is fabricated on the basis of color values only. However, where an amount of a substance in a measured sample is determined based on reference samples under the microscope (e.g., samples stained in reference concentrations under certain fixed conditions), it is sometimes better that the micro color filters MF1 are fabricated so as to match the spectra of the reference samples.

In this case, it is effective to set the colors of respective micro color filters MF1, as in the method of (4). For example, in the case of the method (3), there is the advantage that if the reference samples are made of the same color material (dye) so as to achieve matching with the spectra of regions stained by each stain method, it becomes feasible to implement determination and quantitation of an internal substance in an unknown sample, by matching spectral distributions thereof. For this reason, the reference samples in the above method (3) may be made using the same color material (dye or pigment), with importance to the spectral distribution.

Furthermore, (5) colors capable of radiating invisible light (invisible colors) may also be set as colors of respective micro color filters MF1, and may be included in the micro color filters MF1 in use. Here the invisible light means light in the invisible wavelength region (e.g., light in the wavelength range of 200 to 380 nm or light in the wavelength range of 780 nm to 20 µm). Normally, colors are defined on the basis of visibility, but a similar idea, i.e., an expression of multiplying an arbitrary spectral distribution by three reference functions can also be applied to the invisible region. For this reason, it is also necessary to use references in the invisible region, and thus they are also included.

Next, a method of producing the slide glasses with color-reference microfilters (10, 10A, and 10B) according to the above-described first to third embodiments will be described.

First, each micro color filter MF1 for color reference used in each slide glass with color-reference microfilters will be described.

Each micro color filter MF1 for color reference used in each of the slide glasses with color-reference microfilters (10, 10A, 10B) shown in Figs. 5, 13A, and 16A can be formed on the glass plate 1 by basically using a color resist ink material used, for example, in printing for color image pickup devices and for liquid crystals, as a color material and printing it, for example, by semiconductor printing technology (photomask technology). The micro color filters produced by this production method demonstrate little change with time, and thus it is a technique effective to mass production.

When the change with time and damage due to medication or the like are taken into consideration, each micro color filter MF1 may be fabricated as a filter formed by slicing a color glass filter made from a coloring material to develop a color in an ion or colloid state, to a small thickness. In this case, for example, it is preferable to fabricate each micro color filter by slicing a commercially available band-pass filter (e.g., trade names: "DTB#450," "DTB#490," "DTB#545," "DTB#570," "DTB#615," "DTB#660," "DTB#700," and "DTB#740," available from Optima Corp) to 100-400 µm and gluing slices together.

Instead of the band-pass filters of long wavelengths of not less than "DTB#615" from Optima Corp, it is also possible to use sharp cut filters of "O-54," "O-58," "R-60," "R-62," and "R-64" available from HOYA, but with use thereof, colors are too deep to fall in color systems of ordinary color systems, which makes it difficult to control the colors by adjustment of slice thickness only and which requires such an adjustment as decrease in the content of the coloring material.

It is, however, difficult to cover all the hues for the micro color filters MF1 by use of existing color glass filters. For example, there exists no color glass filters in the (bright) reddish purple, purple, and bluish purple ranges with good characteristics. In the case of a microscope with an eyepiece, if a large filter is used to cover the entire surface of the subject by the color glass filter and if the subject is observed under the microscope, an eye will see the entire field in the microscope to undergo chromatic adaptation to cause a shift of colors in the entire field toward Neutral (neutral axis), so that the colors tend to look pale as a whole. For this reason, to cover the entire field by the same color is not preferable as a color reference setting method for the microscope. Therefore, as in the case of the slide glasses with color-reference microfilters in the aforementioned first to third embodiments, it is better that a plurality of colors (at least two colors) are simultaneously viewed in the field. It is also convenient to measure a plurality of colors (at least two colors) simultaneously in terms of a measurement operation and data processing.

In addition to the above, glass-specific pigments for printing of glass may also be used as color materials for each micro color filter MF1. A glass-specific pigment is obtained by mixing a metal pigment with fine glass frit and baking the mixture at high temperatures (700-1000°C). Examples of the commercially available materials include glass coloring materials available from Okuno Chemical Industries Co., Ltd.

Another production method of each micro color filter MF1 is a technique of printing color printer ink on the glass plate 1 by a color printer. However, it is printed in fine dots, and these dots under the microscope are recognized by an observer. A color by the color printer is one resulting from spatial integral of these dots in a certain area, and observation of dots on a one-by-one basis will fail to gain an objective color. Therefore, where they are handled as color information, it is necessary to adopt some technique, such as intentional defocus.

As previously described in the setting method (4) of color characteristic values (spectral characteristic values) of respective micro color filters MF1, there is also a technique of staining a measured sample itself or a phantom by use of a dye for each measured sample under the microscope, and fixing it. For example, this dye can be selected from those described in the setting method (3) of color characteristic values (spectral characteristic values) of respective micro color filters MF1.

Furthermore, there is also a method using an interference filter as each micro color filter MF1. In this case, it is difficult to prepare a low-chroma filter (one having gentle spectral characteristics), but use of this method can be better as color references for invisible colors in certain cases. Photonic crystals may also be used as materials for each micro color filter MF1. This is effective in using the micro color filters MF1 as color references in the visible region and in the invisible region.

Next, the method of producing the slide glasses with color-reference microfilters according to the first to third embodiments will be described taking a case of forming each micro color filter MF1 by the above-described semiconductor printing technology, for an example.

First, each micro color filter MF1 is formed in a predetermined region on the glass plate 1 by the photolithography technology as adopted in fabrication of liquid crystals or in fabrication of semiconductor devices or the like as described previously. For example, each micro color filter MF1 can be fabricated through steps described below.

The glass plate 1 to be used may be a member (already cut) having the size (e.g., 76 mm × 26 mm) and shape standardized as a slide glass, or may be a member having other size (e.g., 880 mm x 680 mm, or 150 mm x 150 mm) and shape, which is cut into necessary size and shape in a post-step. For example, a plurality of glass plates 1 (in which the micro color filters MF1 were printed) may be cut into necessary size and shape.

A glass material as a constituent material of the glass plate 1 can be one selected from silica glass, low-expansion glasses (alumino-borosilicate glass and borosilicate glass), soda lime glass, etc., which are normally used for slide glasses and others, without a problem, and a better glass is one with little fluorescence. A base material for liquid crystal (e.g., trade name: "Corning#7059" or the like, available from Corning Inc.) may be used, because it is compatible with color resists described later.

The glass plate 1 is first cleaned. This cleaning is carried out using an ultrasonic cleaning device or the like, in addition to ordinary shower cleaning, brush cleaning, and UV/O₃.

The color resists to be applied onto the glass plate 1 in order to form the respective micro color filters MF1 can be commercially available ones for standard Red (R), Green (G), and Blue (B). Examples of the commercially available color resists include trade names: "M-R302," "M-G302S," and "M-B302" available from Sumitomo Chemical Co., Ltd., trade name: "PD-300 series" available from Hitachi Chemical Co. Ltd., trade names: "Type2" and "Type3" available from ITES Co., Ltd., color pastes for color filters (trade name: "EXCEDIC") available from Dainippon Ink And Chemicals, Inc., and so on.

A dark and light coloring technique based on these three colors (R, G, and B) is, for example, a method of controlling the film thickness of the micro color filters MF1 to be formed, in a coating process of those on the glass plate 1. Another method except the above is a method of dark and light coloring by changing a ratio of a pigment in a color resist material to vehicles (binder resin, dispersing agent, etc.). Furthermore, by mixing pigments used in those color resists, with each other, it is also possible to prepare color resists of intermediate color ranges (e.g., Yellow, Cyan, and Purple (Magenta)) between two colors among the three colors. For making a neutral color with high chroma that cannot be expressed by the aforementioned three reference colors only, a pigment to develop a characteristic color specific thereto is added to prepare a color resist.

Then a color resist thus prepared is applied onto the glass plate 1. At this time, a spin coater is normally used in order to achieve the application in accurate thickness. The application may also be performed by other coating methods using a slit spin coater, a roll coater, a wire bar coater, a die coater, a newly developed CAVEX coater (MICRO Engineering), or the like. For example, the amount of waste coating solution is sometimes large with use of the ordinary spin coater, whereas the rate of use of the color resist is high in the case of the application with the foregoing CAVEX coater, which is thus particularly preferable.

Next, a pre-baking process is carried out in order to evaporate a solvent from the coated solution. Appropriate conditions for the pre-baking process are normally the temperature of about 60-100°C and the time of about 1-3 hours.

Next, exposure with a mask is carried out using an exposure apparatus (a stepper or a mask aligner or the like). At this time the mask (e.g., a mask of the shape matching the arrangement of components shown in Figs. 5, 13A, and 16A) is prepared in advance, and the exposure is done through the mask by the exposure apparatus.

Subsequently, patterning by development, rinsing, and drying are successively carried out. Thereafter, a post-baking process is carried out in order to enhance adhesion between the glass plate 1 and the micro color filter MF1 and corrosion resistance of the micro color filter MF1. Appropriate conditions for the post-baking process are normally the temperature of about 200-230°C and the time of about 20 minutes. The steps described above are just an example of procedure in fabricating the micro color filter MF1 of one color by the printing (coating) method. Therefore, for example, in a case where all the colors are twelve colors, the same steps are repeated twelve times from the first (cleaning) step, so as to complete the application of all the colors. In a case where the black mask part is created as shown in Fig. 1, it can be made in the first step.

In a case where the name label 4 shown in Fig. 5 and the bar code 6 and memo space 7 shown in Fig. 13A are provided according to need, these are made by a known printing technique or thin-film production technique capable of forming them on the glass plate 1.

Next, a method of using each slide glass with color-reference microfilters (10, 10A, 10B) shown in Figs. 5, 13A, and 16A will be described. In the case of the slide glass 10 with color-reference microfilters in Fig. 5, the slide glass 10 and, a preparation with a measured sample thereon are separately prepared. Therefore, prior to intended microscopic measurement or photography of the measured sample, it is necessary to preliminarily measure (or photograph) the color palette portion for microscopic observation in Fig. 5 under the same conditions as those for measurement or photography (determination of color temperature of a light source, determination of a lens, and image taking conditions (e.g., determination of matrix values in acquisition of image)) and store necessary data as reference color filter image data in an image processing unit such as a personal computer.

The large-area color palette portion 2 is provided in order to accurately record the spectral transmission characteristics as well, in addition to the color values. The large-area color palette portion 2 is useful in a case where it is necessary to preliminarily take a spectral distribution of a measured sample, in order to permit a manufacturer of each micro color filter MF1 provided in the large-area color palette portion 2 to trace a temporal change of spectral transmittance later according to need. Since the spectral transmission characteristics are readily measured, the user can also readily determine degrees of fading of the micro color filters MF1 in use.

Thereafter, a sample under the microscope is photographed and then the image data of the measured sample is combined with the reference color filter image preliminarily taken, to make a Fusion Image, and the fusion image is displayed on the display (cf. Figs. 17 and 18). Then this fusion image is used for recording of information and/or for calculation of data. For example, this fusion image is used where it is necessary to perform image processing including color transformation such as chroma enhancement, hue shift, brightness adjustment, or γ correction according to user's preference.

In this case, even if a photographer changes the color characteristics or even if a third person other than the photographer changes the colors according to preference of the third person during inspection (diagnosis) of the taken image, the colors of the sample can be returned to the original colors, based on differences from the reference colors, because the reference colors are known. By the use method as described above, the colors under the microscope turn from relative values having the meaning like a ceremonial photograph, to values handled like physical absolute values.

Since the slide glass 10A with color-reference microfilters in Fig. 13A has the configuration not requiring the preparation for both the slide glass with color-reference microfilters and the slide glass for the measured sample, as described above, the photography of the measured sample results in automatically photographing the micro color filters MF1 of the optimal size corresponding to the magnification of the objective lens in use or photographing the microscopic-observation color palette portion including these. In this case, the color-reference micro color filters MF1, or the microscopic-observation color palette portion including these is included in the resultant image. Therefore, where color correction or the like is automatically carried out after the photography, the micro color filters MF1 measured simultaneously with the measured sample, or the microscopic-observation color palette portion including these is found out and then utilized.

In a case where a measured sample is, for example, sliced and mounted on the measured sample mounting portion 5 and where the measured sample covers a part of the micro color filters MF1 or the microscopic-observation color palette portion including these, this part can also be photographed without trouble, without using the micro color filters MF1 or the microscopic-observation color palette portion including these that the measured sample does not cover.

Furthermore, at this time, the transmission characteristics of the micro color filters MF1 in a strict sense include an absorption of an adhesive used for fabrication of the preparation (e.g., trade name: "Canada balsam" or the like), an absorption of a dye used for stain of the sample and diluted in the adhesive, and an absorption of the cover glass, so that values of the taken image result from addition of all these absorptions. However, since the transmission characteristics of the micro color filters MF1 are known, it is feasible to calculate the absorptions other than that of the micro color filters MF1, from the image itself. For this reason, for example, it becomes feasible to additionally perform a measurement for strictly evaluating the absorption of the adhesive.

The slide glass 10B with color-reference microfilters in Fig. 16A is a slide glass assumed to be used in execution of automatic photography, and the use method thereof was previously detailed and thus is not described herein.

The slide glasses (slide glasses with color-reference micro color filters) according to the present invention, including the slide glasses 10, 10A, and 10B with color-reference micro color filters according to the respective embodiments described above, permit us to objectively evaluate the color characteristics of the image of the measured sample taken with the microscope, using the color characteristics (spectral characteristics) of the color-reference microfilters as comparative references.

Even in a case where different measured samples of the same kind are photographed with different cameras (cameras with different spectral sensitivities), the color characteristics of the color-reference microfilters are measured to be used as comparative references, whereby a difference in color characteristics between images taken with the different cameras can be quantitatively captured. For it, for example, the color characteristics of one of the images taken with the two different cameras are corrected so as to match the color characteristics of the other image.

Furthermore, it also becomes feasible to securely perform the color evaluation and color correction for images outputted by different image output means on the basis of pictures taken with different cameras (output images on displays, or output images on recording media such as paper by printers).

For example, even in a case where a final image outputted by image output means is obtained by effecting multiple image processings as shown in Fig. 25, on the original image of the measured sample, it is feasible to readily capture how the color characteristics (spectral characteristics) of the original image of the measured sample have changed process by process, by performing both the photography of the measured sample and the measurement of the color-reference micro color filters in each of the processes. At this time, a more definitive history is made by also recording the light-source characteristics, lens system characteristics, sensitivity characteristics, etc. during photography in each of the processings.

In Fig. 25, G1 represents a graph (e.g., the graphs shown in Figs. 7 to 12, or the like) indicating an example of the spectral characteristics (optical transmittance) of the reference sample with reference colors, G2 a graph showing the spectral characteristics (optical transmittance) of the measured sample, G3 a graph showing an example of the spectral characteristics of the light source, G4 a graph showing an example of the spectral characteristics (optical transmittance) of the lens system, G5 a graph showing an example of the sensitivity characteristics (raw data) of the camera, and G6 a graph (e.g., the sRGB system or the like) showing an example of the sensitivity characteristics (corrected data) of the camera. M represents a transformation matrix for transforming G5 to G6.

G7 is a graph showing an example of relationship between the measured sample (mark "Δ" in the figure) and the reference colors (mark "o" in the figure) as the result of color transformation effected with use of G1-G6. G7 indicates the example of expression of the relationship between a* values and b* values obtained in the case where for the measured sample and reference colors, the display data of the sRGB color coordinate system is transformed to the display data of the XYZ color system and it is further transformed to the display data in the L*a*b* color system.

If the slide glass with color-reference micro color filters according to the present invention were not used and, for example, even if a history were left for the spectral characteristics of the light source, the spectral distribution characteristics of the color camera, etc. in each of the processing steps, the tone would vary with slight processing in the final color software on a personal computer, and thus the history would be of little use. To put it simply, it is merely a single picture as a ceremonial photograph and loses the meaning as measured values. Therefore, it is contemplated that analytical evaluation cannot be made later on.

As described above, the slide glass with color-reference micro color filters according to the present invention is arranged to clarify how the color-reference micro color filters were recorded and how the colors of the color-reference micro color filters were expressed with color change, and it is thus effective in the following usage, for example.

Namely, the first example is a use method of reducing a palette image of color-reference micro color filters photographed under the same conditions as those for a measured sample, and attaching the reduced palette image to an edge in an image of the measured sample. In this case, the miniature image (index image) of the color references under the same conditions are handled simultaneously with the image of the measured sample, and even if a color change is made on software, it will also be made on the miniature image (index image) of the color references. For this reason, it becomes feasible to check how much the colors have been changed from the original colors (color characteristics), which is very convenient (e.g., cf. Fig. 26).

In Fig. 26, G8 represents a graph showing an example in which the reference value data before correction is expressed as a relation between a* values and b* values in the L*a*b* color system, and G9 a graph showing an example in which the reference value data after the correction is expressed as a relation between a* values and b* values in the L*a*b* color system. Furthermore, in G8 and G9 of Fig. 26, mark "Δ" indicates data of the measured sample, and mark "o" data of the reference colors.

By recording the image of the measured sample in the same manner as the image of the color-reference micro color filters, as described above, how the image was taken (or measured) can be known at a time of a check on the image later. In the case of a color correction for the taken image, if the correction is made together with the image of the color references of the microfilters, there will also remain a history of the color correction, and it is thus possible to analyze whether the color correction was made later or how the color correction was made. Conversely, since the color correction for the Original is also made using the color information of the reference image part, this color reference is essential thereto.

Another example is a use method as a reference for color matching (basic data between system media). In a system incorporating a microscope, which is configured to take an image under the microscope, to express it on a display or the like, or to print the image by a printer, and to record the image information, it becomes feasible to photograph the color-reference micro color filters, to display an image thereof on the display, and to evaluate the colors thereof; or it becomes feasible to print the image by the printer or the like and to evaluate the colors thereof.

For this reason, it is feasible to make the evaluation while viewing the actual micro color filters under visual observation. It is also possible to make the color-reference micro color filters to match the photographed colors with the colors on the display or the colors expressed by the printer, whereby it becomes feasible to make color matching references within a theoretically achievable range beyond the difference among various devices.

A further example is a use method as quantitation reference and spectral estimation (basic data for quantitation). Concerning values of a portion taken by an RGB camera, there are an infinitely large number of spectral distributions matching with values corresponding to the RGB values (for a strict story, the RGB values are represented by R_{sRGB}, G_{sRGB}, and B_{sRGB} in the sRGB color system) (i.e., there exist metamers), and it is thus impossible to determine a spectral distribution from RGB only.

However, for example, in a case where spectra of pigments of reference measured samples (color-reference micro color filters) or spectra of pigments or dyes used for staining measured samples are known and where dyes and pigments used for staining an unknown measured sample are known, i.e., in a case where the reference measured samples prepared in advance (the color-reference micro color filters) encompass the dyes (pigments) of the unknown measured sample, it becomes feasible to make the spectral estimation of the unknown measured sample from measured values of the color camera in photography (e.g., R, G, and B). Quantitation also becomes feasible, of course.

A further example is a use method as intelligent information media. The slide glasses (slide glasses with color-reference micro color filters) according to the present invention, including the slide glasses with color-reference micro color filters according to the aforementioned respective embodiments, contain the bar code 6 and the coating of the magnetic material as the memo space 7, or IC chip embedding or the like, as shown in Fig. 13A, and thus they alone can record various information.

For example, besides merely an identification number of a measured sample and a key word for search for the measured sample, voice information for memorandum during microscopic diagnosis thereof can be recorded as digital data, or the image information can also be recorded as digital data. Therefore, in a case where the measured sample is one changing its chemical state or physical state with time, it is possible, for example, to automatically take a slide glass with the measured sample out of a storage place at intervals of a certain fixed time, automatically measure it, photograph temporal change data thereof, and write the data into the memo space.

The conventional recording media were a hard disk in a personal computer or MO disks and CD disks, or memories of a server connected to LAN. In the sense of risk avoidance and risk diversification, it will conceivably be also important in the future to record the information in a recording area provided in a measured sample itself, and the slide glasses with color-reference micro color filters according to the present invention can be used as such recording media.

The above is summarized as follows: the slide glasses of the present invention (slide glasses with color-reference micro color filters) including the slide glasses 10, 10A, and 10B with color-reference micro color filters according to the respective embodiments present the following effects thanks to the color-reference micro color filters under the microscope.

Namely, 1) there remains the record of color characteristics of the original image about the accurate measured sample. 2) Based on the photographed reference colors, raw data (original image data) can be recovered as to how an arbitrary sample was photographed. 3) A color reproduction system can be constructed as a closed system, using the color matching references (color-reference micro color filters). 4) Spectral values of the measured sample in measurement can be estimated by use of the color-reference micro color filters. An amount of a substance to be quantitated in a microscopic measured sample can be determined by use of the color-reference micro color filters. 5) They serve as intelligent information media. 6) The slide glasses with color-reference microfilters according to the present invention can also provide the same effects for the invisible colors of the measured sample as in the case where the information of colors in the aforementioned visible region is handled.

The above detailed the embodiments of the slide glasses according to the present invention, but it is noted that the slide glasses according to the present invention are not limited to the aforementioned embodiments.

For example, the application of the slide glasses (slide glasses with color-reference microfilters) according to the present invention is not limited to the image taking systems. For example, the slide glasses according to the present invention (slide glasses with color-reference microfilters) may also be used as references for colors in photography of the measured sample with a spectral imaging sensor (e.g., the spectral imaging sensor described in Japanese Patent No. 2713838).

In use of an image taking system provided with a spectral imaging sensor, various information can be acquired from taken image data. For example, use of it clarifies even states of spectra of respective parts and, by preparing basic data spectra, it becomes feasible to implement identification and quantitation of contained samples corresponding to the prepared basic data. In this case, the result with better accuracy is achieved by taking even the basic data in the same system, and it is thus necessary to prepare measured samples as references for quantitation stained by known dye concentrations and dye bath times. Concerning this, a sample to be actually measured itself may be used as a reference, or a phantom simulating it may be stained.

### (First and Second Embodiments of Cover Glass)

In the slide glasses (slide glasses with color-reference microfilters) according to the above first to third embodiments two or more color-reference micro color filters were placed on the upper surface of the glass plate, but these color-reference micro color filters may also be placed on a cover glass to be brought into contact with the glass plate in a state in which a measured sample is placed in between.

Namely, the microscope is designed to focus on a surface of the cover glass on the measured sample side, instead of the normal upper side of the slide glass (the upper surface of the glass plate). The field of the microscope does not exceed the size of the cover glass.

Fig. 27A is an illustration showing a fundamental configuration in the first embodiment of the cover glass according to the present invention, and Fig. 27B an illustration showing a fundamental configuration in the second embodiment of the cover glass according to the present invention.

The cover glass 20A in the first embodiment shown in Fig. 27A is square, and a plurality of color-reference micro color filters MF are printed on the surface of the cover glass on the measured sample side. An identification mark 200 for distinguishing the upper surface from the back surface is printed on the cover glass 20A of the first embodiment. On the other hand, the cover glass 20B in the second embodiment shown in Fig. 27B is rectangular, and a plurality of color-reference micro color filters are placed in asymmetric arrangement with respect to the center of gravity of the cover glass 20B. This arrangement of the color-reference micro color filters permits one to distinguish the upper surface from the back surface of the cover glass 20B.

In these cover glasses 20A, 20B according to the first and second embodiments, a plurality of color-reference micro color filters MF matched with respective magnifications of objective lenses in the microscope may be placed on the surface on the measured sample side, and the plurality of color-reference micro color filters MF may be scattered over the entire surface of the cover glasses 20A, 20B. In the case where the color-reference micro color filters MF are scattered over the entire surface of the cover glasses 20A, 20B as described above, even if some color-reference micro color filters MF hide behind a measured sample, a sharp image can be taken by use of the rest color-reference micro color filters MF.

Next, a pathological diagnosis system according to the present invention will be described. The pathological diagnosis system is one to which the slide glass of the structure as described above (the slide glass according to the present invention) or the cover glass of the structure as described above (the cover glass according to the present invention) is applied.

Fig. 28 is an illustration showing a schematic system configuration where a remote pathological diagnosis is carried out, as a pathological diagnosis system according to the present invention. This remote pathological diagnosis system has a configuration in which image data is transferred from an observation-side terminal 300 forming an image taking system to a diagnosis-side terminal 500 for pathological diagnosis through a communication line 400, irrespective of whether wired or wireless, such as LAN, Internet, a satellite circuit, or a telephone line.

The observation-side terminal 300 in the remote pathological diagnosis system of Fig. 28 is comprised of a microscope 310, a control unit 320, a computer 330, an image converter 340, and a monitor 350. The microscope 310 has an X-Y stage 311 on which the slide glass 10 and cover glass 20 as described above are mounted, and a revolver equipped with objective lenses 313 of different magnifications, and is provided with a camera 312 as an image detector. The control unit 320 controls driving of the X-Y stage 311, capture of image data, and so on. The computer 300 executes a pathological diagnosis software application to send image data from the control unit 320 (containing an image of the color-reference micro color filters taken for color control) to the image converter 340 and to send out data from I/O 331 through communication line 400 to the diagnosis-side terminal 500. The image converter 340 performs such control as to correctly reproduce colors to be displayed on the monitor 350, based on the color information about colors, brightness, etc. of the image data sent from the computer 330.

On the other hand, the diagnosis-side terminal 500 in the remote pathological diagnosis system of Fig. 28 has a computer 510, an image converter 520, and a monitor 530. The computer 510 also executes a pathological diagnosis software application to receive the image data (containing the image of the color-reference micro color filters) transferred from the observation-side terminal 300 through the communication line 400, at I/O 511, and to output data to the image converter 520. The image converter 520 converts the information about the colors and brightness of the color-reference micro color filters thus transferred, into preset color information for correct display on the monitor.

The colors and contrast are important information in the pathological diagnosis. Normally, the color matching of microscope and computer images can be made so as to near the actual colors by adjustment of the camera and monitor. However, in the case of the remote pathological diagnosis, the observation-side terminal 300 and the diagnosis-side terminal 500 use their respective monitors and others different from each other, and the diagnosis-side terminal 500 used to fail to determine whether the colors displayed on the monitor were correct.

Since the pathological diagnosis system according to the present invention uses the slide glass or the cover glass with the color-reference micro color filters thereon, it becomes feasible for the diagnosis-side terminal 500 remote from the observation-side terminal 300 to acquire the color and contrast information as references. In consequence, the diagnosis-side terminal 500 in the pathological diagnosis system becomes able to implement optimal adjustment of colors and contrast of the image displayed.

In application of the slide glasses 10A, 10B according to the second and third embodiments, the color and contrast information as references is retained along with the image of the measured sample, and thus, even with change in the color and contrast information of the taken image due to change of the illumination system of the microscope, the camera, or the like, it becomes feasible to correctly display the corrected image not only at the diagnosis-side terminal 500, but also at the observation-side terminal 300 by making use of the color information as references.

When use is made, for example, of a digital slide to record the whole information of the slide glass or cover glass with color-reference micro color filters in high resolution, the color and contrast information as references is also recorded along with the image of the measured sample and in this case, it also becomes feasible to reproduce correct colors and contrast.

Next, the operation of the remote pathological diagnosis system as described above will be described using the flowchart of Fig. 29. Fig. 29 is a flowchart for explaining pre-processing before a start of a remote pathological diagnosis in the pathological diagnosis system shown in Fig. 28.

First, prepared at the observation-side terminal 300 is a sample (comprised of glass plate 10 and cover glass 20) including either of the slide glass (the slide glass according to the present invention) and the cover glass (the cover glass according to the present invention) with color-reference color microfilters (step ST1).

The sample prepared is set on the X-Y stage 311 of the microscope 310 (step ST2), and then the color-reference micro color filters of the sample are photographed with the camera 312 through the objective lens 313 of a predetermined magnification (step ST3). The photographing operation at the observation-side terminal 300 is carried out through the control unit 320 by the computer 330.

According to the pathological diagnosis software, the image data of the color-reference micro color filters thus taken is displayed through the image converter 340 on the monitor 350 and is sent out from I/O 331 onto the communication line 400 (step ST4).

At the diagnosis-side terminal 500, the image data transferred through the communication line 400 is received via I/O 511, and the pathological diagnosis software executed in the computer 510 outputs this image data to the image converter 520. The image converter 520 adjusts the colors and contrast of the input image data so as to be correctly displayed on the monitor 530 (step ST5), and the color-adjusted image is displayed on the monitor 530 (step ST6).

Thereafter, the diagnosis-side terminal 500 instructs the observation-side terminal 300 to perform control of the tense of the image, and the microscope necessary for the diagnosis, and the pathological diagnosis is carried out while repeating transmission and reception of data between these terminals 300, 500 (step ST7).

It is apparent that the present invention can be modified in various ways, from the above description of the present invention. For example, the imaging device applied to the image taking system does not have to be limited to the camera, but may be any component capable of photographing a sample, such as a digital slide (virtual slide), a scanner, an image pickup part in Virtual Microscope, or the like. Such modifications should not be considered as a departure from the spirit and scope of the present invention, and all improvements obvious to those skilled in the art are to be encompassed within the scope of claims which will follow.

### Industrial Applicability

As described above, the present invention offers the color information as comparative references applicable to the color evaluation and color correction of the image of the measured sample taken with the microscope.

## Claims

1. A slide glass used (10; 10A; 10B) in a microscope (310) in an image taking system (300) having at least a microscope (310) for observing a measured sample, and an imaging device (312) for taking an image of the measured sample that is acquired from said microscope (310) and defined by electromagnetic radiation of wavelength in the range 200 nanometers to 20 micrometers, said slide glass (10, 10A, 10B) comprising:
a glass plate (1); and
one or more micro color filter groups (3a-3d) placed on one surface (F1) of said glass plate (1), each micro color filter group (3a-3d) comprising two or more color-reference micro color filters (MF1) for acquisition of colors as comparative references to be used in color evaluation and color correction of the image,
**characterized in that**:
said two or more color-reference micro color filters (MF1) belonging to an identical group out of said one or more micro color filter groups (3a-3d) are placed so as not to overlap with each other, and have their respective reference colors different from each other, and that:
a size of each micro color filter groups (3a-3d) is adjusted within a range where it can be captured within a field of view obtained in use of at least one of objective lenses (313) with different magnifications of the microscope.

2. A slide glass (10; 10A; 10B) according to claim 1, wherein each of said two or more color-reference micro color filters (MF1) belonging to one of said one or more micro color filter groups (3a-3d) has a visible size.

3. A slide glass (10; 10A; 10B) according to claim 1 or 2, wherein said two or more color-reference micro color filters (MF1), belonging to an identical group out of said one or more micro color filter groups (3a-3d), have an identical size to each other.

4. A slide glass (10; 10A; 10B) according to any one of claims 1 to 3, wherein each of said one or more micro color filter groups (3a-3d) further comprises one or more additional color-reference micro color filters (MF1), each filter having an intermediate chroma color demonstrating a chroma difference of an equal spacing relative to the reference colors.

5. A slide glass (10; 10A; 10B) according to any one of claims 1 to 4, wherein each of said one or more additional micro color filter groups (3a-3d) further comprises one or more color-reference micro color filters (MF1), each having an achromatic color plotted on an achromatic axis.

6. A slide glass (10; 10A; 10B) according to any one of claims 1 to 5, wherein each of the reference colors is one of red, green, blue, cyan, magenta, and yellow.

7. A slide glass (10; 10A; 10B) according to any one of claims 1 to 6, wherein each of said two or more color-reference micro color filters (MF1) belonging to an identical group out of said one or more microfilter groups (3a-3d) has a rectangular shape and said color-reference micro color filters (MF1) are placed with a predetermined interval enough to avoid contact with each other.

8. A slide glass (10; 10A; 10B) according to claim 7, further comprising a black microfilter (MF2) of a ring shape placed so as to surround an entire peripheral part of each of said color-reference micro color filters (MF1) without a clearance.

9. A slide glass (10; 10A; 10B) according to any one of claims 1 to 8, wherein each of said two or more color-reference micro color filters (MF1) belonging to an identical group out of said one or more micro filter groups (3a-3d) has a rectangular shape and said color-reference micro color filters (MF1) are juxtaposed in a dense state without a clearance.

10. A slide glass (10; 10A; 10B) according to claim 9, further comprising a black microfilter (MF2) of a ring shape placed so as to surround an entire peripheral part of each of said micro color filter groups (3a-3d) without a clearance.

11. A slide glass (10; 10A; 10B) according to any one of claims 1 to 10, further comprising a measured sample mounting portion (5; 5a) on which the measured sample is to be mounted, said measured sample mounting portion (5; 5a) being provided on the surface (F1) of said glass plate (1).

12. A slide glass (10; 10A; 10B) according to claim 11, wherein at least one group out of said micro color filter groups (3a-3d) is provided in a region of the measured sample mounting portion (5;5a).

13. A cover glass (20A; 20B) to be brought into contact with a measured sample mounting portion (5; 5a) on a slide glass(10; 10A; 10B) used in a microscope (310) in an image taking system (300) having at least a microscope (310) for observing a measured sample, and an imaging device (312) for taking an image of the measured sample that is acquired from said microscope (310) and defined by electromagnetic radiation of wavelength in the range 200 nanometers to 20 micrometers, said cover glass (20A; 20B) comprising:
one or more micro color filter groups (3a-3d) placed on one surface of said cover glass (1), each micro color filter group (3a-3d) comprising two or more color-reference micro color filters (MF1) for acquisition of colors as comparative references to be used in color evaluation and color correction of the image,
**characterized in that**:
said two or more color-reference micro color filters (MF1) belonging to an identical group out of said one or more micro color filter groups (3a-3d) are placed so as not to overlap with each other, and have their respective reference colors different from each other, and that a size of each micro color filter groups (3a-3d) is adjusted within a range where it can be captured within a field of view obtained in use of at least one of objective lenses (313) with different magnifications of the microscope.

14. A cover glass (20A; 20B) according to claim 13, wherein said color-reference micro color filters (MF) are placed in asymmetric arrangement with respect to a center of gravity of said cover glass (20, 20A, 20B).

15. A cover glass (20A; 20B) according to any one of claims 13 to 14, further comprising an identification mark (200) for distinguishing an upper surface from a back surface of said cover glass (1).

16. A pathological diagnosis system in which a slide glass (10; 10A; 10B) according to claim 1 is prepared, and which is configured to perform a pathological diagnosis by use of an image of a measured sample mounted on said slide glass (10; 10A; 10B), said pathological diagnosis system comprising:
an image taking system (300) having at least a microscope (310) for observing the measured sample, and an imaging device (312) for taking an image of the measured sample acquired from said microscope (310);
an image converter (520) configured to adjust a color of an image to be displayed, based on color information of said color-reference micro color filters (MF; MF1) photographed in said image taking system (300); and
a monitor (530) for displaying an image resulting from the color adjustment by said color converter (520).

17. A pathological diagnosis system in which a cover glass (20A; 20B) according to claim 13 is prepared, and which is configured to perform a pathological diagnosis by use of an image taken through said cover glass (20A; 20B), of a measured sample mounted on a slide glass (10; 10A; 10B), said pathological diagnosis system comprising:
an image taking system (300) having at least a microscope (310) for observing the measured sample, and an imaging device (312) for taking an image of the measured sample acquired from said microscope (310);
an image converter (520) configured to adjust a color of an image to be displayed, based on color information of said color-reference micro color filters (MF; MF1) photographed in said image taking system (300); and
a monitor (530) for displaying an image resulting from the color adjustment by said color converter (520).

## Patentansprüche

1. Schiebeglas (10; 10A; 10B) zur Verwendung in einem Mikroskop (310) in einem Bildaufnahmesystem (300), das zumindest ein Mikroskop (310) zum Betrachten einer Messprobe sowie eine Bildaufnahmevorrichtung (312) zum Aufnehmen eines Bilds der Messprobe, das von dem Mikroskop (310) erhalten wird und durch elektromagnetische Strahlung einer Wellenlänge im Bereich von 200 Nanometern bis 20 Mikrometern definiert ist, aufweist, wobei das Schiebeglas (10; 10A; 10B) umfasst:
eine Glasplatte (1); und
eine oder mehrere Mikrofarbfiltergruppen (3a - 3d), die auf einer Oberfläche (F1) der Glasplatte (1) angeordnet ist oder sind, wobei jede Mikrofarbfiltergruppe (3a - 3d) zwei oder mehr Farbreferenzmikrofarbfilter (MF1) zum Erfassen von Farben als Vergleichsreferenzen zur Verwendung bei der Farbauswertung und Farbkorrektur des Bilds aufweist,
**dadurch gekennzeichnet, dass** die zwei oder mehr Farbreferenzmikrofarbfilter (MF1), die zu einer identischen Gruppe von der einen oder den mehreren Mikrofarbfiltergruppen (3a - 3d) gehören, so angeordnet sind, dass sie einander nicht überlappen, und deren jeweilige Referenzfarben voneinander unterschiedlich sind, und dass:
eine Größe jeder Mikrofarbfiltergruppen (3a - 3d) in einen Bereich eingestellt ist, wo sie innerhalb eines Blickfelds aufgenommen werden kann, das im Gebrauch von zumindest einer von Objektivlinsen (313) mit unterschiedlichen Vergrößerungen des Mikroskops erhalten wird.

2. Schiebeglas (10; 10A; 10B) nach Anspruch 1, worin jeder der zwei oder mehr Farbreferenzmikrofarbfilter (MF1), der zu einer der einen oder den mehreren Mikrofarbfiltergruppen (3a - 3d) gehört, eine sichtbare Größe hat.

3. Schiebeglas (10; 10A; 10B) nach Anspruch 1 oder 2, worin die zwei oder mehr Farbreferenzmikrofarbfilter (MF1), die zu einer identischen Gruppe von der einen oder den mehreren Mikrofarbfiltergruppen (3a - 3d) gehören, eine zueinander identische Größe haben.

4. Schiebeglas (10; 10A; 10B) nach einem der Ansprüche 1 bis 3, worin jede der einen oder mehreren Mikrofarbfiltergruppen (3a - 3d) ferner einen oder mehrere zusätzliche Farbreferenzmikrofarbfilter (MF1) aufweist, wobei jeder Filter eine intermediär-chromatische Farbe hat, die eine Chromadifferenz von gleichem Abstand relativ zu den Referenzfarben aufzeigt.

5. Schiebeglas (10; 10A; 10B) nach einem der Ansprüche 1 bis 4, worin jede der einen oder mehreren zusätzlichen Mikrofarbfiltergruppen (3a - 3d) ferner einen oder mehrere Farbreferenzmikrofarbfilter (MF1) aufweist, die jeweils ein auf einer achromatischen Achse aufgetragene achromatische Farbe aufweisen.

6. Schiebeglas (10; 10A; 10B) nach einem der Ansprüche 1 bis 5, worin jede der Referenzfarben eine von Rot, Grün, Blau, Cyan, Magenta und Gelb ist.

7. Schiebeglas (10; 10A; 10B) nach einem der Ansprüche 1 bis 6, worin jeder der zwei oder mehr Farbreferenzmikrofarbfilter (MF1), der zu einer identischen Gruppe von der einen oder den mehreren Mikrofarbfiltergruppen (3a - 3d) gehört, eine rechteckige Form hat, und die Farbreferenzmikrofarbfilter (MF1) mit einem vorbestimmten Intervall angeordnet sind, das ausreicht, um einen Kontakt miteinander zu vermeiden.

8. Schiebeglas (10; 10A; 10B) nach Anspruch 7, das ferner einen ringförmigen schwarzen Mikrofilter (MF2) aufweist, der so angeordnet ist, dass er einen gesamten Umfangsteil jedes der Farbreferenzmikrofarbfilter (MF1) ohne Zwischenraum umgibt.

9. Schiebeglas (10; 10A; 10B) nach einem der Ansprüche 1 bis 8, worin jeder der zwei oder mehreren Farbreferenzmikrofarbfilter (MF1), der zu einer identischen Gruppe von der einen oder den mehreren Mikrofarbfiltergruppen (3a - 3d) gehört, eine rechteckige Form hat, und die Farbreferenzmikrofarbfilter (MF1) in einem dichten Zustand ohne Zwischenraum nebeneinander liegen.

10. Schiebeglas (10; 10A; 10B) nach Anspruch 9, das ferner einen ringförmigen schwarzen Mikrofilter (MF2) aufweist, der so angeordnet ist, dass er einen gesamten Umfangsteil jeder der Mikrofarbfiltergruppen (3a - 3d) ohne Zwischenraum umgibt.

11. Schiebeglas (10; 10A; 10B) nach einem der Ansprüche 1 bis 10, das ferner einen Messprobenhalteabschnitt (5; 5a) aufweist, an dem die gemessene Probe anzubringen ist, wobei der Messprobenhalteabschnitt (5; 5a) auf der Oberfläche (F1) der Glasplatte (1) vorgesehen ist.

12. Schiebeglas (10; 10A; 10B) nach Anspruch 11, worin zumindest eine Gruppe von den Mikrofarbfiltergruppen (3a - 3d) in einem Bereich des Messprobenhalteabschnitts (5; 5a) vorgesehen ist.

13. Deckglas (20A; 20B), das mit einem Messprobenhalteabschnitt (5; 5a) auf einem Schiebeglas (10; 10A; 10B) in Kontakt zu bringen ist, das in einem Mikroskop (310) in einem Bildaufnahmesystem (300) verwendet wird, das zumindest ein Mikroskop (310) zum Betrachten einer Messprobe sowie eine Bildaufnahmevorrichtung (312) zum Aufnehmen eines Bilds der Messprobe, das von dem Mikroskop (310) erhalten wird und durch elektromagnetische Strahlung einer Wellenlänge im Bereich von 200 Nanometer bis 20 Mikrometer definiert ist, aufweist, wobei das Deckglas (20A; 20B) umfasst:
eine oder mehrere Mikrofarbfiltergruppen (3a - 3d), die auf einer Oberfläche (F1) des Deckglases (1) angeordnet sind, wobei jede Mikrofarbfiltergruppe (3a - 3d) zwei oder mehr Farbreferenzmikrofarbfilter (MF1) zum Erfassen von Farben als Vergleichsreferenzen zur Verwendung bei der Farbauswertung und Farbkorrektur des Bilds aufweist,
**dadurch gekennzeichnet, dass** die zwei oder mehr Farbreferenzmikrofarbfilter (MF1), die zu einer identischen Gruppe von der einen oder den mehreren Mikrofarbfiltergruppen (3a - 3d) gehören, so angeordnet sind, dass sie einander nicht überlappen, und deren jeweilige Referenzfarben voneinander unterschiedlich sind, und dass eine Größe jeder Mikrofarbfiltergruppen (3a - 3d) in einen Bereich eingestellt ist, wo sie innerhalb eines Blickfelds aufgenommen werden kann, das im Gebrauch von zumindest einer von Objektivlinsen (313) mit unterschiedlichen Vergrößerungen des Mikroskops erhalten wird.

14. Deckglas (20A; 20B) nach Anspruch 13, worin die Farbreferenzmikrofarbfilter (MF) in einer asymmetrischen Anordnung in Bezug auf einen Schwerpunkt des Deckglases (20, 20A, 20B) angeordnet sind.

15. Deckglas (20A; 20B) nach einem der Ansprüche 13 bis 14, das ferner eine Identifikationsmarkierung (200) aufweist, um eine Oberseite von einer Rückseite des Deckglases (1) zu unterscheiden.

16. Pathologisches Diagnosesystem, worin ein Schiebeglas (10; 10A; 10B) gemäß Anspruch 1 bereitgestellt wird und konfiguriert ist, um eine pathologische Diagnose durch Verwendung eines Bilds einer auf dem Schiebeglas (10; 10A; 10B) angebrachten Messprobe durchzuführen, wobei das pathologische Diagnosesystem umfasst:
ein Bildaufnahmesystem (300), das zumindest ein Mikroskop (310) zum Betrachten der Messproben sowie eine Bildaufnahmevorrichtung (312) zum Aufnehmen eines von dem Mikroskop (310) erhaltenen Bilds der Messprobe aufweist;
einen Bildwandler (520), der konfiguriert ist, um eine Farbe eines anzuzeigenden Bilds basierend auf Farbinformation der Farbreferenzmikrofarbfilter (MF; MF1), die in dem Bildaufnahmesystem (300) fotografiert sind, einzustellen; und
einen Monitor (530) zum Anzeigen eines Bilds, das aus der Farbeinstellung durch den Farbwandler (520) resultiert.

17. Pathologisches Diagnosesystem, worin ein Deckglas (20A; 20B) gemäß Anspruch 13 bereitgestellt wird und konfiguriert ist, um eine pathologische Diagnose unter Verwendung eines durch das Deckglas (20A; 20B) aufgenommenen Bilds einer auf einem Schiebeglas (10; 10A; 10B) angebrachten Messprobe durchzuführen, wobei das pathologische Diagnosesystem umfasst:
ein Bildaufnahmesystem (300), das zumindest ein Mikroskop (310) zum Betrachten der Messprobe sowie eine Bildaufnahmevorrichtung (312) zum Aufnehmen eines von dem Mikroskop (310) erhaltenen Bilds der Messprobe aufweist;
einen Bildwandler (520), der konfiguriert ist, um eine Farbe eines anzuzeigenden Bilds basierend auf Farbinformation der Farbreferenzmikrofarbfilter (MF; MF1), die in dem Bildaufnahmesystem (300) fotografiert sind, einzustellen; und
einen Monitor (530) zum Anzeigen eines Bilds, das aus der Farbeinstellung durch den Farbwandler (520) resultiert.

## Revendications

1. Préparation microscopique (10 ; 10A ; 10B) utilisée dans un microscope (310) d'un système de prise de vues (300) comportant au moins un microscope (310) destiné à observer un échantillon mesuré, et un dispositif de formation d'image (312) pour prendre une image de l'échantillon mesuré, qui est acquise à partir dudit microscope (310) et qui est définie par un rayonnement électromagnétique dont la longueur d'onde est dans la gamme de 200 nanomètres à 20 micromètres, ladite préparation microscopique (10, 10A, 10B) comprenant :
une lame de verre (1) ; et
un ou plusieurs groupes de microfiltres colorés (3a-3d) placés sur une surface (F1) de ladite lame de verre (1), chaque groupe de microfiltres colorés (3a-3d) comprenant deux ou plus de deux microfiltres colorés de référence des couleurs (MF1) pour l'acquisition de couleurs en tant que références comparatives devant être utilisées lors de l'évaluation des couleurs et de la correction des couleurs de l'image,
**caractérisée en ce que** :
lesdits deux ou plus de deux microfiltres colorés de référence des couleurs (MF1) appartenant à un même groupe parmi lesdits un ou plusieurs groupes de microfiltres colorés (3a-3d) sont placés de façon à ne pas se chevaucher mutuellement et ont des couleurs de référence respectives différentes les unes des autres, et **en ce que** :
la taille de chacun des groupes de microfiltres colorés (3a-3d) est ajustée dans un intervalle dans lequel ils peuvent être acquis à l'intérieur d'un champ de vue obtenu lors de l'utilisation d'au moins l'un d'objectifs (313) ayant des grossissements différents du microscope.

2. Préparation microscopique (10 ; 10A ; 10B) selon la revendication 1, dans laquelle chacun desdits deux ou plusieurs microfiltres colorés de référence des couleurs (MF1) appartenant à l'un desdits un ou plusieurs groupes de microfiltres colorés (3a-3d) a une taille visible.

3. Préparation microscopique (10 ; 10A ; 10B) selon la revendication 1 ou 2, dans laquelle lesdits deux ou plus de deux microfiltres colorés de référence des couleurs (MF1), appartenant à un même groupe parmi lesdits un ou plusieurs groupes de microfiltres colorés (3a-3d), ont des tailles identiques les unes aux autres.

4. Préparation microscopique (10 ; 10A ; 10B) selon l'une quelconque des revendications 1 à 3, dans laquelle chacun des un ou plusieurs groupes de microfiltres colorés (3a-3d) comprend en outre un ou plusieurs microfiltres colorés de référence des couleurs supplémentaires (MF1), chaque filtre ayant une couleur de chroma intermédiaire faisant apparaître une différence de chroma d'un espacement égal par rapport aux couleurs de référence.

5. Préparation microscopique (10 ; 10A ; 10B) selon l'une quelconque des revendications 1 à 4, dans laquelle chacun des un ou plusieurs groupes supplémentaires de microfiltres colorés (3a-3d) comprend en outre un ou plusieurs microfiltres colorés de référence des couleurs (MF1), ayant chacun une couleur achromatique tracée sur un axe achromatique.

6. Préparation microscopique (10 ; 10A ; 10B) selon l'une quelconque des revendications 1 à 5, dans laquelle chacune des couleurs de référence est l'une du rouge, du vert, du bleu, du cyan, du magenta et du jaune.

7. Préparation microscopique (10 ; 10A ; 10B) selon l'une quelconque des revendications 1 à 6, dans laquelle chacun desdits deux ou plus de deux microfiltres colorés de référence des couleurs (MF1) appartenant à un même groupe parmi lesdits un ou plusieurs groupes de microfiltres (3a-3d) a une forme rectangulaire et lesdits microfiltres colorés de référence des couleurs (MF1) sont placés à des intervalles prédéterminés suffisants pour éviter d'être en contact les uns avec les autres.

8. Préparation microscopique (10 ; 10A ; 10B) selon la revendication 7, comprenant en outre un micro-filtre noir (MF2) de forme annulaire placé de façon à entourer la totalité d'une partie périphérique de chacun desdits microfiltres colorés de référence des couleurs (MF1) sans aucun interstice.

9. Préparation microscopique (10 ; 10A ; 10B) selon l'une quelconque des revendications 1 à 8, dans laquelle chacun desdits deux ou plus de deux microfiltres colorés de référence des couleurs (MF1) appartenant à un même groupe parmi lesdits un ou plusieurs groupes de microfiltres (3a-3d) a une forme rectangulaire et lesdits microfiltres colorés de référence des couleurs (MF1) sont juxtaposés dans un état dense sans aucun interstice.

10. Préparation microscopique (10 ; 10A ; 10B) selon la revendication 9, comprenant en outre un micro-filtre noir (MF2) de forme annulaire placé de façon à entourer la totalité d'une partie périphérique de chacun desdits groupes de microfiltres colorés (3a-3d) sans aucun interstice.

11. Préparation microscopique (10 ; 10A ; 10B) selon l'une quelconque des revendications 1 à 10, comprenant en outre une partie de montage d'échantillon mesuré (5 ; 5a) sur laquelle doit être monté l'échantillon mesuré, ladite partie de montage d'échantillon mesuré (5 ; 5a) étant disposée sur la surface (F1) de ladite lame de verre (1).

12. Préparation microscopique (10 ; 10A ; 10B) selon la revendication 11, dans laquelle au moins un groupe parmi lesdits groupes de microfiltres colorés (3a-3d) est disposé dans une région de la partie de montage d'échantillon mesuré (5 ; 5a).

13. Lamelle couvre-objet (20A ; 20B) devant être mise en contact avec une partie de montage d'échantillon mesuré (5 ; 5a) sur une préparation microscopique (10 ; 10A ; 10B) utilisée dans un microscope (310) d'un système de prise de vues (300) comportant au moins un microscope (310) pour observer un échantillon mesuré, et un dispositif de formation d'image (312) pour prendre une image de l'échantillon mesuré qui est acquise à partir dudit microscope (310) et qui est définie par un rayonnement électromagnétique dont la longueur d'onde se situe dans la gamme de 200 nanomètres à 20 micromètres, ladite lamelle couvre-objet (20A, 20B) comprenant :
un ou plusieurs groupes de microfiltres colorés (3a-3d) placés sur une surface de ladite lamelle couvre-objet (1), chaque groupe de microfiltres colorés (3a-3d) comprenant deux ou plus de deux microfiltres colorés de référence des couleurs (MF1) pour l'acquisition de couleurs en tant que références comparatives devant être utilisées dans l'évaluation des couleurs et la correction des couleurs de l'image,
**caractérisée en ce que** :
lesdits deux ou plus de deux microfiltres colorés de référence des couleurs (MF1) appartenant à un même groupe parmi lesdits un ou plusieurs groupes de microfiltres colorés (3a-3d) sont placés de façon à ne pas se chevaucher mutuellement, et ont des couleurs de référence respectives différentes les unes des autres, et **en ce que** la taille de chacun des groupes de microfiltres colorés (3a-3d) est ajustée dans un intervalle dans lequel ils peuvent être acquis à l'intérieur d'un champ de vue obtenu lors de l'utilisation d'au moins l'un d'objectifs (313) ayant des grossissements différents du microscope.

14. Lamelle couvre-objet (20A ; 20B) selon la revendication 13, dans laquelle lesdits microfiltres colorés de référence des couleurs (MF) sont placés selon un agencement asymétrique par rapport à un centre de gravité de ladite lamelle couvre-objet (20, 20A, 20B).

15. Lamelle couvre-objet (20A ; 20B) selon l'une quelconque des revendications 13 à 14, comprenant en outre un repère d'identification (200) pour distinguer une surface supérieure d'une surface arrière de ladite lamelle couvre-objet (1).

16. Système de diagnostic pathologique dans lequel une préparation microscopique (10 ; 10A ; 10B) selon la revendication 1 est préparée, et qui est configuré pour effectuer un diagnostic pathologique en utilisant une image d'un échantillon mesuré monté sur ladite préparation microscopique (10 ; 10A ; 10B), ledit système de diagnostic pathologique comprenant :
un système de prises de vues (300) ayant au moins un microscope (310) pour observer l'échantillon mesuré, et un dispositif de formation d'image (312) pour prendre une image de l'échantillon mesuré acquise à partir dudit microscope (310) ;
un convertisseur d'image (520) configuré pour ajuster une couleur d'une image devant être affichée, sur la base d'informations de couleurs desdits microfiltres colorés de référence des couleurs (MF ; MF1) photographiés dans ledit système de prise de vues (300) ; et
un écran (530) pour afficher une image résultant de l'ajustement des couleurs effectué par ledit convertisseur de couleurs (520).

17. Système de diagnostic pathologique dans lequel une lamelle couvre-objet (20A ; 20B) selon la revendication 13 est préparée, et qui est configuré pour réaliser un diagnostic pathologique en utilisant une image prise à travers ladite lamelle couvre-objet (20A ; 20B) d'un échantillon mesuré monté sur une préparation microscopique (10 ; 10A ; 10B), ledit système de diagnostic pathologique comprenant :
un système de prise de vues (300) comportant au moins un microscope (310) pour observer l'échantillon mesuré, et un dispositif de formation d'image (312) pour prendre une image de l'échantillon mesuré, acquise à partir dudit microscope (310) ;
un convertisseur d'image (520) configuré pour ajuster une couleur d'une image devant être affichée, sur la base d'informations de couleurs desdits microfiltres colorés de référence des couleurs (MF ; MF1) photographiés dans ledit système de prise de vues (300) ; et
un écran (530) pour afficher une image résultant de l'ajustement des couleurs effectué par ledit convertisseur de couleurs (520).
